(19) Europäisches Patentamt
European Patent Office
Office européen des brevets

(11) **EP 4 386 888 A1**

(12) **EUROPEAN PATENT APPLICATION**

(43) Date of publication:
**19.06.2024   Bulletin 2024/25**

(21) Application number: **23215558.0**

(22) Date of filing: **11.12.2023**

(51) International Patent Classification (IPC):
*H01M 4/131* (2010.01)    *H01M 4/133* (2010.01)
*H01M 4/48* (2010.01)    *H01M 4/505* (2010.01)
*H01M 4/525* (2010.01)    *H01M 4/583* (2010.01)
*H01M 4/62* (2006.01)    *H01M 10/0525* (2010.01)
*H01M 4/02* (2006.01)

(52) Cooperative Patent Classification (CPC):
**H01M 10/0525; H01M 4/131; H01M 4/133;
H01M 4/483; H01M 4/505; H01M 4/525;
H01M 4/583; H01M 4/622; H01M 4/625;**
H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **14.12.2022   KR 20220174987**

(71) Applicant: **Samsung SDI Co., Ltd.
Yongin-si, Gyeonggi-do 17084 (KR)**

(72) Inventors:
• **JO, SUNGNIM
17084 Gyeonggi-do (KR)**
• **SON, INHYUK
17084 Gyeonggi-do (KR)**
• **MAH, SANGKOOK
17084 Gyeonggi-do (KR)**
• **SHIM, KYUEUN
17084 Gyeonggi-do (KR)**

(74) Representative: **Michalski Hüttermann & Partner
Patentanwälte mbB
Kaistraße 16A
40221 Düsseldorf (DE)**

(54) **COMPOSITE CATHODE ACTIVE MATERIAL, CATHODE AND LITHIUM BATTERY INCLUDING THE COMPOSITE CATHODE ACTIVE MATERIAL, AND METHOD OF PREPARING THE COMPOSITE CATHODE ACTIVE MATERIAL**

(57)    A composite cathode active material may include a $1^{st}$ core including a first lithium transition metal oxide, a $2^{nd}$ core including a second lithium transition metal oxide, and a shell conforming to a surface of at least one of the $1^{st}$ core and the $2^{nd}$ core, wherein the shell may include first metal oxide , a first carbon-based material, and a second carbon-based material, the first metal oxide may be provided within a matrix of the first carbon-based material, the first metal oxide may be represented by $M_aO_b$ ($0<a\leq3$ and $0<b<4$, wherein if (e.g., when) a is 1, 2, or 3, b is not an integer), M may be at least one metal selected from among Groups 2 to 13, 15, and 16 of the periodic table of elements, the second carbon-based material may include a fibrous carbon-based material having an aspect ratio of 10 or more, the first lithium transition metal oxide and the second lithium transition metal oxide have a different particle diameter from each other, the first lithium transition metal oxide may include a primary particle having a particle diameter of 3 $\mu$m or more, and the second lithium transition metal oxide may include a primary particle having a particle diameter of 1 $\mu$m or more.

EP 4 386 888 A1

## Description

## CROSS-REFERENCE TO RELATED APPLICATION

The present application claims priority to and the benefit of Korean Patent Application No. 10-2022-0174987, filed on December 14, 2022, in the Korean Intellectual Property Office, the entire disclosure of which is incorporated herein by reference.

## BACKGROUND

### 1. Field

One or more aspects of embodiments of the present disclosure relate to a composite cathode active material, a cathode and a lithium battery employing the composite cathode active material, and a method of preparing the composite cathode active material.

### 2. Description of the Related Art

Following the miniaturization and higher performance of one or more suitable devices (e.g., electronic devices), it has become important or desirable for lithium batteries to have higher energy density as well as miniaturization (e.g., size reduction) and weight reduction. For example, lithium batteries having relatively high capacity have become increasingly important or desirable.

In an effort to realize a suitable lithium battery having the desirable characteristics, cathode active materials having high capacity are being investigated.

Cathode active materials in the related art may have relatively poor lifespan characteristics and poor thermal stability due to undesirable (e.g., side) reactions.

Accordingly, methods capable of preventing or reducing the deterioration of performance of a battery including a cathode active material are desired.

## SUMMARY

One or more aspects of embodiments of the present disclosure are directed toward a novel composite cathode active material capable of preventing or reducing degradation of lithium battery performance by inhibiting or reducing side reactions of the composite cathode active material and improving reversibility of electrode reactions.

One or more aspects of embodiments of the present disclosure are directed toward a cathode including the composite cathode active material.

One or more aspects of embodiments of the present disclosure are directed toward a lithium battery employing (e.g., utilizing) the cathode.

One or more aspects of embodiments of the present disclosure are directed toward a method of preparing a composite cathode active material.

Additional aspects will be set forth in part in the description which follows and, in part, will be apparent from the description, or may be learned by practice of the presented embodiments of the disclosure.

According to one or more embodiments, a composite cathode active material includes:

a $1^{st}$ core including a first lithium transition metal oxide,
a $2^{nd}$ core including a second lithium transition metal oxide, and
a shell along a surface of at least one of the $1^{st}$ core or the $2^{nd}$ core,
wherein the shell includes a first metal oxide (e.g., one or more metal oxides or at least one first metal oxide), a first carbon-based material, and a second carbon-based material,
the first metal oxide is provided within a matrix of the first carbon-based material,
the first metal oxide is represented by $M_aO_b$ ($0<a\leq3$ and $0<b<4$, wherein if (e.g., when) a is 1, 2, or 3, b is not an integer), M is at least one metal selected from among Groups 2 to 13, 15, and 16 of the periodic table of elements,
the second carbon-based material includes a fibrous carbon-based material having an aspect ratio of 10 or more,
the first lithium transition metal oxide and the second lithium transition metal oxide have a different particle diameter from each other,
the first lithium transition metal oxide includes a primary particle having a particle diameter of 3 $\mu$m or more, and
the second lithium transition metal oxide includes a primary particle having a particle diameter of 1 $\mu$m or more.

According to one or more embodiments, a composite cathode active material includes:

a 1st core including a first lithium transition metal oxide,
a 2nd core including a second lithium transition metal oxide, and
a shell along a surface of at least one of the 1st core or the 2nd core,
wherein the shell may include a first metal oxide, a first carbon-based material, and a second carbon-based material,
the first metal oxide may be provided within a matrix of the first carbon-based material,
the first metal oxide may be represented by $M_aO_b$ (wherein $0<a\leq3$ and $0<b<4$, and if (e.g., when) a is 1, 2, or 3, b is not an integer),
M may be at least one metal selected from among Groups 2 to 13, 15, and 16 of the periodic table of elements,
the second carbon-based material may include a fibrous carbon-based material having an aspect ratio of 10 or more,
the first lithium transition metal oxide and the second lithium transition metal oxide may have a different particle diameter from each other,
the first lithium transition metal oxide may include a primary particle having a particle diameter of 3 $\mu$m or more, and
the second lithium transition metal oxide may include a primary particle having a particle diameter of less than 1 $\mu$m.

According to one or more embodiments, the second lithium transition metal oxide may be an agglomerate of a plurality of primary particles having a particle diameter of 1 $\mu$m or less (e.g., the second lithium transition metal oxide may be a secondary particle being an agglomerate of a plurality of primary particles having a particle diameter of 1 $\mu$m or less).

According to one or more embodiments, a cathode may include:
the composite cathode active material.

According to one or more embodiments,
a lithium battery may include the cathode.

According to one or more embodiments, a method of preparing a composite cathode active material includes:

preparing a 1st core/shell structure by mechanically milling the first lithium transition metal oxide, a composite, and a second carbon-based material,
preparing a 2nd core/shell structure by mechanically milling the second lithium transition metal oxide, a composite, and a second carbon-based material, and
preparing the composite cathode active material by mixing the 1st core/shell structure and the 2nd core/shell structure,
wherein the composite includes a first metal oxide represented by $M_aO_b$ ($0<a\leq3$ and $0<b<4$, wherein if (e.g., when) a is 1, 2, or 3, b is not an integer), and a first carbon-based material,
the first metal oxide is provided in a matrix of the first carbon-based material, M is at least one metal selected from among Groups 2 to 13, 15, and 16 of the periodic table of elements,
the second carbon-based material includes a fibrous carbon-based material having an aspect ratio of 10 or more,
the first lithium transition metal oxide and the second lithium transition metal oxide have a different particle diameter from each other,
the first lithium transition metal oxide includes a primary particle having a particle diameter of 3 $\mu$m or more, and
the second lithium transition metal oxide includes a primary particle having a particle diameter of 1 $\mu$m or more.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a schematic cross-sectional diagram of a core/shell structure according to embodiments;
FIG. 2 is a scanning electron microscope image of a particle surface of a 1st core/shell structure utilized in Example 1;
FIG. 3 is a graph showing a result of a high-temperature cycling test of lithium batteries prepared in Example 5 and Comparative Examples 7 to 10;
FIG. 4 is a schematic diagram of a lithium battery according to embodiments;
FIG. 5 is a schematic diagram of a lithium battery according to embodiments; and
FIG. 6 is a schematic diagram of a lithium battery according to embodiments.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," "one of", and "selected from among", if (e.g., when) preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof

Various embodiments are shown in the accompanying drawings. The present disclosure may, however, be embodied in many different forms and should not be construed as limited to the example embodiments set forth herein. Rather, these example embodiments are provided so that this disclosure will be thorough and complete, and will fully convey the scope of the present disclosure to those skilled in the art. In the drawings, like numbers refer to like elements throughout, and duplicative descriptions thereof may not be provided.

It will also be understood that if (e.g., when) an element is referred to as being "on" or "over" another element, it can be directly on the other element (e.g., without any intervening elements therebetween) or intervening elements may also be present. In contrast, if (e.g., when) an element is referred to as being "directly on" or "directly over" another element, there are no intervening elements present.

It will be understood that, although the terms "first", "second", "third", etc. may be utilized herein to describe one or more suitable elements, components, regions, layers, and/or sections, these elements, components, regions, layers, and/or sections should not be limited by these terms. These terms are only utilized to distinguish one element, component, region, layer, and/or section, from another element, component, region, layer, and/or section. For example, a first element, component, region, layer, and/or section could be termed a second element, component, region, layer, and/or section, without departing from the teachings of the disclosure.

The terminology utilized herein is for the purpose of describing particular embodiments only and is not intended to be limiting of the present disclosure. As utilized herein, the singular forms "a", "an" and "the" are intended to include the plural forms as well including "at least one", unless the context clearly indicates otherwise. The term "at least one" should not be interpreted as being limited to a singular form. It will be further understood that the terms "includes " and/or " including," or "comprises" and/or "comprises" if (e.g., when) utilized in this specification, specify the presence of stated features, regions, integers, steps, operations, elements, and/or components, but do not preclude the presence or addition of one or more other features, regions, integers, steps, operations, elements, components, and/or groups thereof.

Furthermore, spatially relative terms, such as "lower", "bottom", or "under" and "upper", "top", or "above" may be utilized herein to conveniently describe one element or feature's relationship to another element or feature. It will be understood that spatially relative terms are intended to encompass different orientations of the device while the device is being utilized or operated, in addition to the orientation depicted in the drawings. For example, if (e.g., when) the device in one of the drawings is turned over, elements described as being on the "lower" or "bottom" side of other elements would then be oriented on "upper" or "top" sides of the other elements. Therefore, example term "lower" can encompass both (e.g., simultaneously) an orientation of "lower" and "upper". The device may be placed in other orientations (may be rotated by 90 degrees or in a different direction), and spatially relative terms utilized herein may be interpreted accordingly.

Unless otherwise defined, all terms (including technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the specification and the relevant art and should not be interpreted in an idealized sense or an overly formal sense unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

"Group" refers to a group in the periodic table of elements according to the 1-18 Group numbering system by the International Union of Pure and Applied Chemistry ("IUPAC").

The term "particle diameter" as utilized herein refers to an average particle diameter if (e.g., when) the particle is spherical, and refers to an average major axis length if (e.g., when) the particle is non-spherical. The particle diameter may be measured utilizing a suitable technique, e.g., a particle size analyzer (PSA), transmission electron microscope photography, and/or scanning electron microscope photography. Another method may be performed by using a measuring device with dynamic light scattering, analyzing data to count a number of particles relative to each particle size, and then calculating to obtain an average particle diameter. The term "particle diameter" refers to, for example, an average particle diameter. The term "average particle diameter" refers to, for example, a median particle diameter (D50).

D50 may refer to a particle size corresponding to a cumulative volume of 50% as calculated from the side of particles with the smallest particle size in a particle size distribution as measured by a laser diffraction method.

D90 may refer to a particle size corresponding to a cumulative volume of 90% as calculated from the side of particles with the smallest particle size in a particle size distribution as measured by a laser diffraction method.

D10 may refer to a particle size corresponding to a cumulative volume of 10% as calculated from the side of particles with the smallest particle size in a particle size distribution as measured by a laser diffraction method.

Also, in the present disclosure, if structures, rods, tubes, fibers, etc. are spherical or circular in cross-section, "diameter" indicates a particle or circular diameter or an average particle or circular diameter, and if the structures, rods, tubes, fibers etc. are non-spherical or circular in cross-section, the "diameter" indicates a major axis length or an average major axis length.

As utilized herein, the term "metal" refers to both (e.g., simultaneously) metals and metalloids such as silicon and/or germanium, in an elemental or ionic state.

As utilized herein, the term "alloy" refers to a mixture of two or more metals.

The term "electrode active material" as utilized herein refers to a suitable electrode material capable of undergoing lithiation and delithiation.

As utilized herein, the term "cathode active material" refers to a suitable cathode material capable of undergoing lithiation and delithiation.

As utilized herein, the term "anode active material" refers to a suitable anode material capable of undergoing lithiation and delithiation.

As utilized herein, the terms "lithiation" and "to lithiate" refer to a process of adding (e.g., diffusing) lithium ions to an electrode active material.

As utilized herein, the terms "delithiation" and "to delithiate" refer to a process of removing lithium ions from an electrode active material.

As utilized herein, the terms "charging" and "to charge" refer to a process of providing electrochemical energy to a battery.

As utilized herein, the terms "discharging" and "to discharge" refer to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While example embodiments are described herein, there may be alternatives, modifications, variations, improvements, and substantial equivalents of the example embodiments disclosed herein, including those that are not presently unforeseen or unappreciated, may arise from applicants or those skilled in the art. Accordingly, the appended claims as filed and as they can be amended are intended to embrace all such alternatives, modifications, variations, improvements and substantial equivalents.

Hereinbelow, a composite cathode active material according to one or more embodiments, a cathode including the same, a lithium battery, and a method of preparing the composite cathode active material will be described in greater detail.

The composite cathode active material may include a 1st core including a first lithium transition metal oxide; a

2nd core including a second lithium transition metal oxide; and a shell conforming to a surface of at least one of the 1st core or the 2nd core, wherein the shell may include a first metal oxide (e.g., one or more first metal oxides or at least one first metal oxide), a first carbon-based material, and a second carbon-based material, the first metal oxide may be provided within a matrix of the first carbon-based material, the first metal oxide may be represented by $M_aO_b$ ($0<a\leq3$ and $0<b<4$, wherein if (e.g., when) a is 1, 2, or 3, b is not an integer), M may be at least one metal selected from among Groups 2 to 13, 15, and 16 of the periodic table of elements, the second carbon-based material may include a fibrous carbon-based material having an aspect ratio of 10 or more, the first lithium transition metal oxide and the second lithium transition metal oxide have a different particle diameter from each other, the first lithium transition metal oxide may include a primary particle having a particle diameter of 3 $\mu$m or more, and the second lithium transition metal oxide may include a primary particle having a particle diameter of 1 $\mu$m or more.

Hereinafter, the following description is made for the purpose of providing a theoretical basis that supports an excellent or suitable effect of a composite cathode active material according to the present embodiments; however, it should be understood that the description is provided to further the understanding of the present disclosure and should not be construed as limiting the present disclosure in any way.

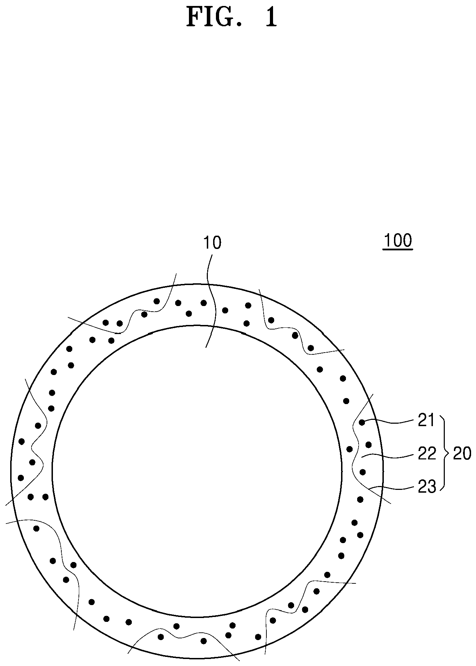

The composite cathode active material may include a 1st core/shell structure including a shell provided on a 1st core; and a 2nd core/shell structure including a shell provided on a 2nd core. The 1st core may include a first lithium transition metal oxide, and the 2nd core may include a second lithium transition metal oxide. Because the first lithium transition metal oxide and the second lithium transition metal oxide have a different particle diameter from each other, the 1st core/shell structure and the 2nd core/shell structure may have, for example, a different particle diameter from each other. The 1st core/shell structure and the 2nd core/shell structure may each have, for example, a structure shown in FIG. 1.

Referring to FIG. 1, a core/shell structure 100 may include a core 10 and a shell 20 provided substantially continuously or substantially discontinuously along a surface of the core 10. The shell 20 may completely or partially cover the core 10. The shell 20 may include a first metal oxide 21, a first carbon-based material 22, and a second carbon-based material 23. The second carbon-based material 23 may include a fibrous carbon having an aspect ratio of 10 or more. If (e.g., when) preparing the core/shell structure 100, the shell 20 may be provided on the lithium transition metal oxide core 10 by utilizing a composite including a plurality of first metal oxides 21 provided in a matrix of the first carbon-based material 22. Thus, the shell 20 may be substantially uniformly provided on the core 10 while agglomeration of the first carbon-based material 22 is prevented or reduced. The shell 20 provided on the core 10 may effectively or suitably prevent or reduce contact between the core 10 and the electrolyte from. Due, at least in part, to effective or suitable prevention or reduction of the contact between the core 10 and the electrolyte, the shell 20 may prevent or reduce undesirable or side reactions that may occur if the core 10 and the electrolyte come into contact with each other. Further, by providing the shell 20 on the core 10, cation mixing that may occur during contact of the core 10 with the electrolyte may be inhibited or reduced. The inhibition or reduction of cation mixing due to contact of the core 10 with the electrolyte may inhibit or reduce the formation of resistance layers inside and/or on a surface of the composite cathode active material 100. Furthermore, providing the shell 20 on the core 10 may also inhibit or reduce elution (e.g., loss) of transition metal ions from the lithium transition metal oxide core 10.

The first carbon-based material 22 may be, for example, a crystalline carbon-based material. The first carbon-based material 22 may be, for example, a carbon-based nanostructure. The first carbon-based material 22 may be, for example, a carbon-based two-dimensional nanostructure. For example, the first carbon-based material 22 may be graphene. In this case, as the shell 20 including graphene and/or a matrix thereof have suitable flexibility, volume changes of the core 10 may be easily or suitably accommodated during cycling of the battery, and crack formation inside the core 10 may be suppressed or reduced. Due to high electronic conductivity of graphene, interfacial resistance between the core 10 and the electrolyte may decrease. Therefore, with the introduction of the shell 20 including graphene, the internal resistance of the resulting lithium battery including the composite cathode active material may be maintained or reduced. In contrast, carbon-based nanostructure materials of related art may be easily agglomerated, and thus it may be difficult to form substantially uniform coating on a lithium transition metal oxide core.

The second carbon-based material 23 may be a fibrous carbon having an aspect ratio of 10 or more. As the shell 20 includes the second-based carbon material, the conduction path in the core/shell structure 100 and a composite cathode active material including the same may be further elongated. The second carbon-based material 23 may reduce the internal resistance of a cathode including the composite cathode active material by forming a three-dimensional conductive network between a plurality of particles of the core/shell structure 100. As the fibrous carbon is fixed on the core/shell structure 100, a substantially uniform and stable three-dimensional conductive network may be formed between a plurality of particles of the core/shell structure 100. Thus, as the core/shell structure 100 includes the second carbon-based material 23, a lithium battery provided with (e.g., including) the composite cathode active material may have improved high-rate capability. By way of a comparable example, a simple mixture of the lithium transition metal oxide core and fibrous carbon (e.g., as the second carbon-based material 23) may fail to form a substantially uniform three-dimensional conductive network between a plurality of lithium transition metal oxide core particles due to agglomeration of the fibrous carbon and/or the like.

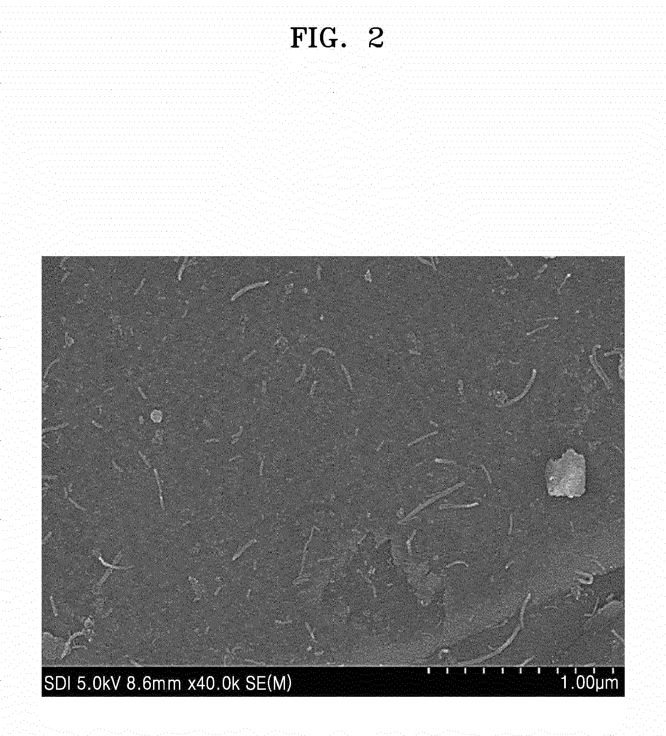

Referring to FIG. 2, the second carbon-based material 23 may have an aspect ratio of 10 or more, or 20 or more. For example, the second carbon-based material 23 may have an aspect ratio of about 10 to about 100,000, about 10 to about 80,000, about 10 to about 50,000, about 10 to about 10,000, about 10 to about 5,000, about 10 to about 1,000, about 10 to about 500, about 10 to about 100, or about 10 to about 50. The aspect ratio of the second carbon-based material 23 is, for example, a ratio of length of the major axis passing through the center of the second carbon-based material 23 to length of the minor axis that is crossing (e.g., is substantially perpendicular) to the major axis, wherein the major axis passes through the second carbon-based material 23 in a longitudinal (e.g., elongation) direction thereof, and the center of the second carbon-based material 23, and the minor axis is crossing (e.g., is substantially perpendicular) to the major axis and may be a diameter of the second carbon-based material 23. For example, the second carbon-based material 23 may have a diameter of 50 nm or less, 30 nm or less, 20 nm or less, or 10 nm or less. For example, the second carbon-based material 23 may have a diameter of about 1 nm to about 50 nm, about 1 nm to about 30 nm, or about 1 nm to about 10 nm. If (e.g., when)If the diameter of the second carbon-based material 23 is excessively large (e.g. is outside the recited range), the absolute number of filaments per unit volume decreases and thus, the effect of internal resistance reduction may become insignificant or may be unsuitably reduced. If (e.g., when)If the diameter of the second carbon-based material 23 is excessively small (e.g., is outside the recited range), substantially uniform dispersion may be difficult to attain. For example, the second carbon-based material 23 may have a length of 1,000 $\mu$m or less, 100 $\mu$m or less, 50 $\mu$m or less, 10 $\mu$m or less, 5 $\mu$m or less, 2 $\mu$m or less, 1 $\mu$m or less, 500 nm or less, or 300 nm or less. For example, the second carbon-based material 23 may have a length of about 100 nm to about 1,000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or about 100 nm to about 300 nm. For example, the second carbon-based material 23 may have a length of about 500 nm to about 1,000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. As the length of the second carbon-based material 23 increases, the internal resistance of the electrode may decrease. If (e.g., when) the length of the second carbon-based material 23 is excessively small (e.g., is outside the recited range), it may be difficult to provide an effective or suitable conduction path. An aspect ratio, a diameter, and/or a length of second carbon-based material 23 can be measured by SEM, HRTEM and the like.

Referring to FIG. 2, a first lithium transition metal oxide may include a primary particle having a particle diameter of 3 $\mu$m or more. The primary particle having a particle diameter of 3 $\mu$m or more may have one-body particle form. As the first lithium transition metal oxide is one-body particle having a particle diameter of 3 $\mu$m or more, side reactions with electrolyte during charging and discharging may decrease due to decreased specific surface area and decreased crack formation during the processes of charging and discharging. Cycling performance of a lithium battery employing the composite cathode active material including the first lithium transition metal oxide may further improve. If, however, the first lithium transition metal oxide is an agglomerate of a plurality of primary particles having a particle diameter of 3 $\mu$m or less, e.g., is a secondary particle, the specific surface area of the agglomerate increases, and therefore, side reactions with electrolyte during the processes of charging and discharging may increase. The primary particle having a particle diameter of 3 $\mu$m or more included in the first lithium transition metal oxide may be, for example, a single-crystal particle.

In some embodiments, a second lithium transition metal oxide may include a primary particle having a particle diameter of 1 $\mu$m or more. The primary particle having a particle diameter of 1 $\mu$m or more may have one-body particle form. As the second lithium transition metal oxide is one-body particle having a particle diameter of 1 $\mu$m or more, side reactions with electrolyte during charging and discharging may decrease due to decreased specific surface area and decreased crack formation during the processes of charging and discharging. Cycling performance of a lithium battery employing the composite cathode active material including the second lithium transition metal oxide may further improve. If, however, the second lithium transition metal oxide is an agglomerate of a plurality of primary particles having a particle diameter of 1 $\mu$m or less, e.g., a secondary particle, the specific surface area of the agglomerate increases, and therefore, crack formation during charging and discharging and side reactions with electrolyte during the processes of charging and discharging may increase, readily causing degradation. The primary particle having a particle diameter of 1 $\mu$m or more included in the second lithium transition metal oxide may be, for example, a single-crystal particle.

The composite cathode active material may include a 1st core/shell structure including a first lithium transition metal oxide, and a 2nd core/shell structure including a second lithium transition metal oxide. As the 1st core/shell structure and the 2nd core/shell structure have a different particle diameter from each other, the 2nd core/shell structure may be provided in voids between the 1st core/shell structures, or the 1st core/shell structure may be provided in voids between the 2nd core/shell structures. In the present embodiments, additional disposition in voids between one type or kind of core/shell structure particles of another type or kind of core/shell structure particles, with a different size than the one type or kind of core/shell structure particles, may shorten movement paths of ions in the cathode and as a result, improve ionic conductivity of the cathode including the composite cathode active material. Further, because the shell provided on the core includes a carbon-based material, additional disposition of another type or kind of core/shell structure particles with a different size in voids between one type or kind of core/shell structure particles may shorten movement paths of electrons in the cathode and improve electronic conductivity of the cathode including the composite cathode active material. Consequently, a lithium battery including the composite cathode active material may have improved high-temperature cycling performance while an increase in the internal resistance of the lithium battery may be inhibited or reduced. Further, additional disposition of another type or kind of core/shell structure particles with a different size in voids between one type or kind of core/shell structure particles increases the mixture density of the cathode and as a result, may further improve the energy density of a lithium battery including the composite cathode active material.

For example, in a cathode including a cathode active material, providing carbon-based conductive materials to (e.g., in) voids between cathode active material particles may improve electronic conductivity of the cathode; however, due to lack of ionic conductivity in carbon-based conductive materials, the cathode may show decreased ionic conductivity. Further, as the total thickness of a cathode active material layer increases, the cathode including the cathode active material layer may show a significant decrease in ionic conductivity. Accordingly, a lithium battery employing such a cathode may show a significant decrease in performance.

In the composite cathode active material according to the present embodiments, the first lithium transition metal oxide may be a large-diameter lithium transition metal oxide having a larger particle diameter than that of the second lithium transition metal oxide. The second lithium transition metal oxide may be a small-diameter lithium transition metal oxide having a smaller particle diameter than that of the first lithium transition metal oxide. For example, the $1^{st}$ core may be a large-diameter lithium transition metal oxide, and the $2^{nd}$ core may be a small-diameter lithium transition metal oxide. For example, the $2^{nd}$ core/shell structure having a smaller average particle diameter than that of the $1^{st}$ core/shell structure may be provided in voids between the $1^{st}$ core/shell structures. As small-diameter particles of the $2^{nd}$ core/shell structure are provided in voids between large-diameter particles of the $1^{st}$ core/shell structure, ionic conductivity and/or electronic conductivity of a cathode including the composite cathode active material may improve. Further, energy density of the cathode including the composite cathode active material may improve. As a result, the energy density and cycling performance of a lithium battery including the composite cathode active material may improve.

The first lithium transition metal oxide and the second lithium transition metal oxide may have, for example, a bimodal particle size distribution in the particle size distribution diagram. For example, in the particle size distribution diagram obtained utilizing a particle size analyzer (PSA) and/or the like, the composite cathode active material may show a bimodal particle size distribution having two peaks. The bimodal particle size distribution may have a first peak corresponding to the first lithium transition metal oxide, and a second peak corresponding to the second lithium transition metal oxide.

The first lithium transition metal oxide and the second lithium transition metal oxide may have, for example, a particle size ratio of about 2:1 to about 10:1, about 3:1 to about 10:1, about 3:1 to about 8:1, 3:1 to about 6:1, or about 3:1 to about 5:1. As the first lithium transition metal oxide and the second lithium transition metal oxide have a particle size ratio in any of the above ranges, the energy density and/or cycle characteristics of a lithium battery including the composite cathode active material may be further improved.

The first lithium transition metal oxide may have a particle diameter of, for example, about 3 $\mu$m to about 10 $\mu$m, about 3 $\mu$m to about 8 $\mu$m, or about 4 $\mu$m to about 7 $\mu$m. The particle diameter of the first lithium transition metal oxide may be, for example, a median particle diameter (D50). The first lithium transition metal oxide may have a particle diameter of, for example, about 1 $\mu$m to less than 5 $\mu$m, or about 1 $\mu$m to about 4 $\mu$m. The particle diameter of the first lithium transition metal oxide may be, for example, a median particle diameter (D50). As the first lithium transition metal oxide and the second lithium transition metal oxide have an average particle diameter in any of the above ranges, respectively, the energy density and/or cycle characteristics of a lithium battery including the composite cathode active material may further improve. The particle diameter of the first lithium transition metal oxide and the second lithium transition metal oxide may be measured, for example, by a measurement device utilizing laser diffraction and/or dynamic light scattering. The particle diameter may be measured by, for example, a laser scattering particle size distribution analyzer (for example, LA-920 manufactured by HORIBA) and may be a volume-based median particle diameter (D50) at a cumulative percentage of 50 % by volume from the smallest particle size. In some embodiments, the particle diameter of the first lithium transition metal oxide and/or the second lithium transition metal oxide may be measured utilizing scanning electron microscope (SEM) images, and/or an optical microscope.

The weight ratio of the first lithium transition metal oxide to the second lithium transition metal oxide may be, for example, about 90:10 to about 60:40, about 85:15 to about 65:35, about 80:20 to about 65:35, or about 75:25 to about 65:35. As the first lithium transition metal oxide and the second lithium transition metal oxide have a weight ratio in any of the above ranges, the energy density and/or cycle characteristics of a lithium battery including the composite cathode active material may be further improved.

The composite cathode active material may have a specific surface area of, for example, 0.8 $m^2$/g or less, 0.5 $m^2$/g or less, or 0.3 $m^2$/g or less. The composite cathode active material may have a specific surface area of, for example, about 0.1 $m^2$/g to about 0.8 $m^2$/g, about 0.1 $m^2$/g to about 0.5 $m^2$/g, or about 0.1 $m^2$/g to about 0.3 $m^2$/g. As the composite cathode active material has a relatively small specific surface area in any of the above ranges, side reactions with electrolyte may be inhibited or reduced. As a result, the cycling performance of a lithium battery including the composite cathode active material having a reduced specific surface area may further improve. For example, a specific surface area of a comparable composite cathode active material including a secondary particle formed from a plurality of primary particles may be, for example, 1 $m^2$/g or more. As the composite cathode active material including the secondary particle has an increased specific surface area, side reactions with electrolyte may increase. As a result, the cycling performance of a lithium battery including the composite cathode active material having an increased specific surface area may deteriorate.

The second carbon-based material 23 may include, for example, a carbon nanofiber, a carbon nanotube, or a combination thereof.

For example, the carbon nanotube may include a primary carbon nanotube structure, a secondary carbon nanotube structure formed by agglomeration of a plurality of primary carbon nanotube particles, or a combination thereof.

The primary carbon nanotube structure may be one carbon nanotube unit. The carbon nanotube unit may be a graphite sheet in a cylindrical form with a nano-sized diameter and having a $sp^2$ bond structure. According to a bending angle and a structure of the graphite sheet, the characteristics of conductors, or the characteristics of semiconductors may be exhibited by the carbon nanotube unit. The carbon nanotube unit may be classified, depending on the number of bonds constituting a wall, into a single-walled carbon nanotube (SWCNT), a double-walled carbon nanotube (DWCNT), a multi-walled carbon nanotube (MWCNT), and/or the like. The smaller the wall thickness of the carbon nanotube unit, the lower the (its) resistance.

The primary carbon nanotube structure may include, for example, an SWCNT, a DWCNT, an MWCNT, or a combination thereof. For example, the primary carbon nanotube structure may have a diameter of 1 nm or more, or 2 nm or more. For example, the primary carbon nanotube structure may have a diameter of 20 nm or less, or 10 nm or less. For example, the primary carbon nanotube structure may have a diameter of about 1 nm to about 20 nm, about 1 nm to about 15 nm, or about 1 nm to about 10 nm. For example, the primary carbon nanotube structure may have a length of 100 nm or more, or 200 nm or more. For example, the primary carbon nanotube structure may have a length of 2 $\mu$m or less, 1 $\mu$m or less, 500 nm or less, or 300 nm or less. For example, the primary carbon nanotube structure may have a length of about 100 nm to about 2 $\mu$m, about 100 nm to about 1 $\mu$m, about 100 nm to about 500 nm, about 100 nm to about 400 nm, about 100 nm to about 300 nm, or about 200 nm to about 300 nm. The diameter and length of the primary carbon nanotube structure may be measured from a scanning electron microscope (SEM) image and/or a transmission electron microscope (TEM) image. In one or more embodiments, the diameter and/or length of the primary carbon nanotube structure may be measured by a laser diffraction method.

The secondary carbon nanotube structure may be a structure formed by assembling the primary carbon nanotube structure to form a bundle type or kind or a rope type or kind, in whole or in part. The secondary carbon nanotube structure may include, for example, bundle-type or kind carbon nanotubes, rope-type or kind carbon nanotubes, or a combination thereof. For example, the secondary carbon nanotube structure may have a diameter of 2 nm or more, or 3 nm or more. For example, the secondary carbon nanotube structure may have a diameter of 50 nm or less, 30 nm or less, 20 nm or less, or 10 nm or less. For example, the secondary carbon nanotube structure may have a diameter of about 2 nm to about 50 nm, about 2 nm to about 30 nm, or about 2 nm to about 20 nm. For example, the secondary carbon nanotube structure may have a length of 500 nm or more, 700 nm or more, 1 $\mu$m or more, or 10 $\mu$m or more. For example, the secondary carbon nanotube structure may have a length of 1,000 $\mu$m or less, 500 $\mu$m or less, or 100 $\mu$m or less. For example, the secondary carbon nanotube structure may have a length of about 500 nm to about 1,000 $\mu$m, about 500 nm to about 500 $\mu$m, about 500 nm to about 200 $\mu$m, about 500 nm to about 100 $\mu$m, or about 500 nm to about 50 $\mu$m. The diameter and length of the secondary carbon nanotube structure may be measured from an SEM image and/or an optical microscope image. In some embodiments, the diameter and/or length of the secondary carbon nanotube structure may be measured by a laser diffraction method.

The secondary carbon nanotube structure may be utilized in the preparation of the composite cathode active material, for example, by being dispersed in a solvent and/or the like, and converted into the primary carbon nanotube structure.

The content (e.g., amount) of the second carbon-based material 23 may be, for example, about 5 wt% to about 95 wt%, about 10 wt% to about 90 wt%, about 20 wt% to about 80 wt%, about 30 wt% to about 70 wt% or about 40 wt% to about 60 wt%, with respect to the total weight of the first carbon-based material 22 and the second carbon-based material 23. Including the first carbon-based material 22 and the second carbon-based material 23 within any of the above ranges in the composite cathode active material may more effectively or suitably secure the conduction path in the composite cathode active material and therefore, may further decrease the internal resistance of the composite cathode active material. As a result, the cycling performance of a lithium battery including the composite anode active material may further improve. The content (e.g., amount) of the second carbon-based material 23 may be, for example, about 0.01 wt% to about 1 wt%, about 0.01 wt% to about 0.8 wt%, about 0.01 wt% to about 0.5 wt%, 0.01 wt% to about 0.3 wt% or, about 0.01 wt% to about 0.1 wt%, with respect to the total weight of the composite cathode active material.

Including the second carbon-based material 23 within any of the above ranges in the composite cathode active material may secure the conduction path in the composite cathode active material and therefore, may further decrease the internal resistance of the composite cathode active material. As a result, the cycling performance of a lithium battery including the composite anode active material may further improve.

The second carbon-based material 23 may be provided on a surface of the composite cathode active material. Referring to SEM image of FIG. 2, the second carbon-based material 23 may be provided on a surface of the core/shell structure 100. Further, as shown in FIG. 1, the second carbon-based material 23 may protrude from a surface of the core/shell structure 100. Accordingly, the second carbon-based material 23 may effectively or suitably provide a conductive network between a plurality of core/shell structures 100. As the second carbon-based material 23 is provided in the matrix of a first carbon-based material 22, the second carbon-based material 23 may be easily or suitably coated on the core 10. The matrix of the first carbon-based material 22 may act as a binder binding the core and the second carbon-based material 23 together. Therefore, in a case in which the matrix of the first carbon-based material 22 is absent, it may be difficult to coat the second carbon-based material 23 on the core 10, or the second carbon-based material 23 may be relatively easily delaminated from the core 10 during the process of preparing a cathode slurry. Unlike including the first carbon-based material 22 of the present embodiments, if (e.g., when) a binder is added for binding a lithium transition metal oxide core 10 and the second carbon-based material 23, as the core 10 is covered with, for example, an insulating binder, the internal resistance of the composite cathode active material 100 may increase. If (e.g., when) the core covered with the binder and the second carbon-based material 23 are subjected to a high-temperature heat treatment for carbonization of the binder, the core 10 and the second carbon-based material 23 may degrade during the heat treatment.

The shell 20 may additionally include a first metal oxide 21 and a first carbon-based material 22. Because the first carbon-based material 22 is derived from, for example, a graphene matrix, the first carbon-based material 22 has lower density and higher porosity relative to a carbon-based material derived from a graphitic material. The interplanar distance d002 of the first carbon-based material 22 may be, for example, 3.38 Å or more, 3.40 Å or more, 3.45 Å or more, 3.50 Å or more, 3.60 Å or more, 3.80 Å or more, or 4.00 Å or more. The interplanar distance d002 of the first carbon-based material 22 included in the shell 20 may be, for example, about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. In some embodiments, the interplanar distance d002 of the carbon-based material derived from graphitic material may be, for example, 3.38 Å or less, or from about 3.35 Å to about 3.38 Å. The first metal oxide 21, due to having to withstand voltage properties, may prevent or reduce degradation of lithium transition metal oxides included in the core 10 during charging/discharging at a high voltage. For example, the shell 20 may include a single type or kind of first metal oxide 21, or two or more different types (kinds) of first metal oxides 21. Consequently, high-temperature cycling performance of a lithium battery including the composite cathode active material may improve. For example, the content (e.g., amount) of the shell 20 may be about 0.1 wt% to about 5 wt%, about 0.1 wt% to about 4 wt%, about 0.1 wt% to about 3 wt%, about 0.1 wt% to about 2.5 wt%, about 0.1 wt% to about 2 wt%, or about 0.1 wt% to about 1.5 wt%, with respect to the total weight of the composite cathode active material. The content (e.g., amount) of the first metal oxide 21 may be, for example, about 0.06 wt% to about 3 wt%, about 0.06 wt% to about 2.4 wt%, about 0.06 wt% to about 1.8 wt%, about 0.06 wt% to about 1.5 wt%, about 0.06 wt% to about 1.2 wt%, or about 0.06 wt% to about 0.9 wt%, with respect to the total weight of the composite cathode active material. As the composite cathode active material includes the shell 20 and the first metal oxide 21 in an amount in any of the above ranges, respectively, the lithium battery may have further improved cycling performance.

The first metal oxide 21 may include a first metal, and the first metal may be at least one selected from among Al, Nb, Mg, Sc, Ti, Zr, V, W, Mn, Fe, Co, Pd, Cu, Ag, Zn, Sb, and Se. The first metal oxide 21 may be, for example, at least one selected from among $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2). As the first metal oxide 21 is provided inside the matrix of a first carbon-based material 22, uniformity (or substantially uniformity) of the shell 20 provided on the core 10 may improve, and withstand voltage properties of the composite cathode active material may further improve. For example, the shell 20 may include $Al_2O_x$ (0<x<3) as the first metal oxide 21.

The shell 20 may further include one or more types (kinds) of second metal oxides, represented by $M_aO_c$ (0<a≤3 and 0<c≤4, wherein if (e.g., when) a is 1, 2, or 3, c is an integer). M may be at least one metal selected from among Groups 2 to 13, 15, and 16 of the Periodic Table of Elements. For example, the second metal oxide may include the same metal as in the first metal oxide 21, and the ratio c/a of a and c in the second metal oxide may have a greater value than the ratio (b/a) of a and b in the first metal oxide 21. For example, c/a>b/a may be satisfied. The second metal oxide may be selected, for example, from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide 21 may be, for example, a reduction product of the second metal oxide. The first metal oxide 21 may be obtained from a partial or complete reduction of the second metal oxide. Accordingly, the first metal oxide 21 may have a lower oxygen content (e.g., amount) and a lower oxidation number of the metal, relative to the second metal oxide. For example, the shell 20 may include $Al_2O_x$ (0<x<3) as the first metal oxide 21, and $Al_2O_3$ as the second metal oxide

For example, the shell 20 may include the first carbon-based material 22, and for example, the core 10 may include a lithium transition metal oxide. Further, the first carbon-based material 22 and the transition metal of the lithium transition metal oxide may be, for example, chemically bound by a chemical bond. The carbon atom (C) of the first carbon-based material 22 and the transition metal (Me) of the lithium transition metal oxide may be chemically bound by, for example, a C-Me bond (for example, a C-Co bond). The carbon atom (C) of the first carbon-based material 22 and the transition metal (Me) of the lithium transition metal oxide may be chemically bound by, for example, a C-O-Me bond via an oxygen atom (for example, a C-O-Co bond). The chemical binding of the first carbon-based material 22 provided in the shell 20 and the lithium transition metal oxide provided in the core 10 by a chemical bond may lead to complexation of the core 10 and the shell 20. Thus, the resulting composite cathode active material may be distinguished from simple physical mixtures of the first carbon-based material 22 and the lithium transition metal oxide. Further, the first metal oxide 21 and the first carbon-based material 22 may be chemically bound by a chemical bond. Here, the chemical bond may be, for example, a covalent bond or an ionic bond.

The shell 20 may include, for example, at least one selected from among the first metal oxide 21 and the second metal oxide, and the at least one selected from among the first metal oxide 21 and the second metal oxide may have a particle diameter of, for example, about 0.1 nm to about 100 nm, about 1 nm to about 50 nm, about 1 nm to about 30 nm, about 5 nm to about 30 nm, or about 10 nm to about 30 nm. As the first metal oxide 21 and/or the second metal oxide have a particle diameter in the above nano-size ranges, the first metal oxide 21 and/or the second metal oxide may be more uniformly (e.g., more substantially uniformly) distributed within the matrix of the first carbon-based material 22. If (e.g., when) the particle diameter of one or more of the first metal oxide 21 or the second metal oxide excessively increases (e.g., is outside of the recited range), the internal resistance of the composite cathode active material may increase due to an increase in the thickness of the shell 20. If (e.g., when) the particle diameter of one or more of the first metal oxide 21 or the second metal oxide excessively decreases (e.g., is outside of the recited range), substantially uniform dispersion may be difficult.

The shell 20 may include the first metal oxide 21 and/or the second metal oxide and may include the first carbon-based material 22. The first carbon-based material 22 may be provided in a direction protruding from the surface of the first metal oxide 21 and/or the second metal oxide. The first carbon-based material 22 may be provided in a direction protruding from the surface of the first metal oxide 21 and/or the second metal oxide by directly growing from the surface of the first metal oxide 21 and/or the second metal oxide. The first carbon-based material 22 provided in a direction protruding from the surface of the first metal oxide 21 and/or the second metal oxide may be, for example, a two-dimensional carbon-based nanostructure, a carbon-based flake, and/or graphene.

For example, the composite cathode active material may further include a third metal doped on a core 10, and/or a third metal oxide coated on the core 10. The core 10 is at least one of the first core or the second core. Further, the shell 20 may be provided on the third metal doped on the core 10 and/or the third metal oxide coated on the core 10. For example, after the third metal is doped on a surface of the lithium transition metal oxide core 10, or the third metal oxide is coated on a surface of the lithium transition metal oxide, the shell 20 may be provided on the third metal and/or the third metal oxide. For example, a composite cathode active material may include a core; an interlayer provided on the core; and a shell provided on the interlayer, wherein the interlayer may include a third metal and/or a third metal oxide. The third metal may be at least one metal selected from among Al, Zr, W, and Co, and the third metal oxide may be $Al_2O_3$, $Li_2O\text{-}ZrO_2$, $WO_2$, CoO, $Co_2O_3$, $Co_3O_4$, or a combination thereof.

For example, the shell may have a thickness of about 0.1 nm to about 1 $\mu$m, about 0.5 nm to about 500 nm, about 1 nm to about 100 nm, about 1 nm to about 50 nm, or about 1 nm to about 20 nm. For example, the shell may have a thickness of about 0.1 nm to about 1 $\mu$m, about 1 nm to about 500 nm, about 1 nm to about 300 nm, about 10 nm to about 200 nm, or about 10 nm to about 100 nm. As the shell has a thickness in any of the above ranges, the electronic conductivity of a cathode including the composite cathode active material may further improve. A thickness of the shell can be measured by SEM, HRTEM and the like.

The shell may have, for example, a single-layer structure or a multi-layer structure. For example, the multi-layer structure may have a structure having two to five layers. For example, the single-layer may be a single-layer structure including a first metal oxide, or may be a single-layer structure including a first metal oxide and a second metal oxide. For example, the multi-layer structure may have a structure including: a first layer including a first metal oxide; and a second layer including a second metal oxide. For example, the multi-layer structure may have a structure including: a first layer including a third metal oxide; and a second layer including a first metal oxide. For example, the multi-layer structure may have a structure including: a first layer including a third metal oxide; and a second layer including a first metal oxide and a second metal oxide. For example, the multi-layer structure may have a structure including: a first layer including a first metal oxide; and a second layer including a third metal oxide. For example, the multi-layer structure may have a structure including: a first layer including a first metal oxide and a second metal oxide; and a second layer including a third metal oxide.

The shell may be a dry-coating layer prepared by a dry method. The dry method may be mechanical milling, for example, but without being necessarily limited thereto, may be any suitable method utilized as a dry method in the art.

For example, the content (e.g., amount) of the shell may be 5 wt% or less, 4 wt% or less, 3 wt% or less, 2 wt% or less, 1.5 wt% or less, or 1 wt% or less, with respect to the total weight of the composite cathode active material. For example, the content (e.g., amount) of the shell may be about 0.01 wt% to about 5 wt%, about 0.03 wt% to about 3 wt%, about 0.03 wt% to about 2 wt%, about 0.03 wt% to about 1 wt%, about 0.03 wt% to about 0.5 wt%, or about 0.03 wt% to about 0.1 wt%, with respect to the total weight of the composite cathode active material. The content (e.g., amount) of the first metal oxide may be, for example, about 0.006 wt% to about 3 wt%, about 0.018 wt% to about 1.8 wt%, about 0.018 wt% to about 1.2 wt%, about 0.018 wt% to about 0.6 wt%, about 0.018 wt% to about 0.3 wt%, or about 0.018 wt% to about 0.06 wt%, with respect to the total weight of the composite cathode active material. As the composite cathode active material includes the shell and the first metal oxide in an amount in any of the above ranges, respectively, the cycling performance of the lithium battery may further improve.

The shell conforming (or substantially conforming) to a surface of the core may be formed by, for example, coating the core with a composite including a first metal oxide and a first carbon-based material (e.g., graphene), by milling and/or the like. Accordingly, the shell provided continuously or discontinuously on the surface of the core may include, for example, a composite including a first metal oxide and a first carbon-based material (e.g., graphene), and/or at least one selected from milling products of the second composite. The first metal oxide may be provided in a matrix of a carbon-based material, for example, a graphene matrix. For example, the shell may be prepared from a composite including a first metal oxide and a first carbon-based material, such as graphene. In addition to the first metal oxide, the composite may further include a second metal oxide. For example, the composite may include two or more types (kinds) of first metal oxides. For example, the composite may include two or more types (kinds) of first metal oxides, and two or more types (kinds) of second metal oxides.

The content (e.g., amount) of the composite and at least one of the milling products thereof may be, for example, 5 wt% or less, 3 wt% or less, 2 wt% or less, 2.5 wt% or less, or 1.5 wt% or less, relative to the total weight of the composite cathode active material. For example, the content (e.g., amount) of the composite and the at least one of the milling products may be about 0.01 wt% to about 5 wt%, about 0.03 wt% to about 3 wt%, about 0.03 wt% to about 2 wt%, about 0.03 wt% to about 1 wt%, about 0.03 wt% to about 0.5 wt%, or about 0.03 wt% to about 0.1 wt%, with respect to the total weight of the composite cathode active material. As the composite cathode active material includes the composite and at least one of milling products thereof in an amount in any of the above ranges, cycling performance of a lithium battery including the composite cathode active material may further improve.

The composite may further include at least one selected from among a first metal oxide and a second metal oxide. The at least one selected from among a first metal oxide and a second metal oxide may have a particle diameter of about 1 nm to about 100 nm, about 1 nm to about 50 nm, about 1 nm to about 30 nm, about 5 nm to about 30 nm, or about 10 nm to about 30 nm. As the first metal oxide and/or the second metal oxide have a particle diameter in the above nano-size ranges, the first metal oxide and/or the second metal oxide may be more uniformly (e.g., substantially uniformly) distributed in the matrix of the first carbon-based material of the composite. Accordingly, the composite may be uniformly (e.g., substantially uniformly) coated on the core without (or substantially without) agglomeration and form a shell. In some embodiments, as the first metal oxide and/or the second metal oxide have a particle diameter in the above ranges, the first metal oxide and/or the second metal oxide may be more uniformly (e.g., substantially uniformly) provided on the core. Accordingly, as the first metal oxide and/or the second metal oxide are uniformly (e.g., substantially uniformly) provided on the core, withstand voltage properties may be more effectively or suitably achieved. The particle diameter of the first metal oxide and/or the second metal oxide may be measured, for example, by utilizing a measurement device utilizing a laser diffraction technique and/or a dynamic light scattering technique. The particle diameter may be measured by, for example, a laser scattering particle size distribution analyzer (for example, LA-920 manufactured by HORIBA) and is a volume-based median particle diameter (D50) at a cumulative percentage of 50 % by volume from the smallest particle size. The uniformity of at least one selected from among the first metal oxide and the second metal oxide may have a deviation of 3 % or less, 2 % or less, or 1 % or less. The uniformity may be measured, for example, by XPS. Accordingly, the at least one selected from among the first metal oxide and the second metal oxide may be uniformly (e.g., substantially uniformly) distributed within the composite with a deviation of 3 % or less, 2 % or less, or 1 % or less. In some embodiments, the particle diameter of the first metal oxide and/or the second metal oxide may be measured utilizing scanning electron microscope (SEM) images, and/or an optical microscope.

The composite may include a first carbon-based material. For example, the first carbon-based material may have a branched structure, and at least one metal oxide selected from among the first metal oxide and the second metal oxide may be distributed in the branched structure of the first carbon-based material. The branched structure of the first carbon-based material may include, for example, a plurality of first carbon-based material particles in contact with one another. As the first carbon-based material has such a branched structure, one or more suitable conduction paths may be provided. For example, the first carbon-based material may be a graphene. For example, the graphene may have a branched structure, and at least one metal oxide selected from among the first metal oxide and the second metal oxide may be distributed within the branched structure of the graphene. The branched structure of the graphene may include, for example, a plurality of graphene particles in contact with one another. As the graphene has such a branched structure, one or more suitable conduction paths may be provided.

The first carbon-based material may have, for example, a spherical structure, and at least one metal oxide selected from among the first metal oxide and the second metal oxide may be distributed in the spherical structure. The spherical structure of the first carbon-based material may have a size of about 50 nm to about 300 nm. A plurality of the first carbon-based material having a spherical structure may be provided. As the first carbon-based material has a spherical structure, the composite may have a suitably secure structure. For example, the first carbon-based material may be a graphene. For example, the graphene may have a spherical structure, and at least one metal oxide selected from among the first metal oxide and the second metal oxide may be distributed within the spherical structure. The spherical structure of the graphene may have a size of about 50 nm to about 300 nm. A plurality of graphenes (e.g., a plurality of graphene structures or particles) having an overall spherical structure may be provided. As the graphene has a spherical structure, the composite may have a suitably secure structure.

The first carbon-based material may have, for example, a spiral structure in which a plurality of spherical structures are connected, and at least one metal oxide selected from among the first metal oxide and the second metal oxide may be distributed within the spherical structures of the spiral structure. The spiral structure of the first carbon-based material may have a size of about 500 nm to about 100 $\mu$m. As the first carbon-based material has a spiral structure, the composite may have a suitably secure structure. For example, the first carbon-based material may be a graphene. The graphene may have, for example, a spiral structure in which a plurality of spherical structures are connected, and at least one metal oxide selected from among the first metal oxide and the second metal oxide may be distributed within the spherical structures of the spiral structure. The spiral structure of the graphene may have a size of about 500 nm to about 100 $\mu$m. As the graphene has a spiral structure, the composite may have a suitably secure structure.

The first carbon-based material may have, for example, a cluster structure in which a plurality of spherical structures are agglomerated, and at least one metal oxide selected from among the first metal oxide and the second metal oxide may be distributed within the spherical structures of the cluster structure. The cluster structure of the first carbon-based material may have a size of about 0.5 mm to about 10 mm. As the first carbon-based material has a cluster structure, the composite may have a suitably secure structure. For example, the first carbon-based material may be a graphene. The graphene may have, for example, a cluster structure in which a plurality of spherical structures are agglomerated, and at least one metal oxide selected from among the first metal oxide and the second metal oxide may be distributed within the spherical structures of the cluster structure. The cluster structure of the graphene may have a size of about 0.5 mm to about 10 mm. As the graphene has a cluster structure, the composite may have a secure structure.

The composite may have, for example, a crumpled faceted-ball structure, and at least one selected from among the first metal oxide and the second metal oxide may be distributed inside the structure or on the surface of the structure. As the composite is such a faceted-ball structure, the composite may be easily or suitably applied on the irregular surface irregularities of the core.

The composite may be or have a planar structure, and at least one selected from among the first metal oxide and the second metal oxide may be distributed inside the structure or on the surface of the structure. As the composite has a two-dimensional planar structure, the composite may be easily or suitably applied on the irregular surface irregularities of the core.

The first carbon-based material may extend from the first metal oxide by a distance of 10 nm or less, and may include at least 1 to 20 carbon-based material layers. For example, as a plurality of first carbon-based material layers are stacked, the first carbon-based material having a total thickness of 12 nm or less may be provided on the first metal oxide. For example, the total thickness of the first carbon-based material may be about 0.6 nm to about 12 nm. For example, the first carbon-based material may be a graphene. The graphene may extend from the first metal oxide by a distance of 10 nm or less, and may include at least 1 to 20 graphene layers. For example, as a plurality of graphene layers are stacked, graphene having a total thickness of 12 nm or less may be provided on the first metal oxide. For example, the total thickness of the graphene may be about 0.6 nm to about 12 nm.

A composite cathode active material may include, for example, a 1st core and a 2nd core, wherein the 1st core and the 2nd core may each independently include, for example, a lithium transition metal oxide represented by at least one selected from among (e.g., any one of) Formulae 1 to 8.

$$\text{Formula 1} \qquad \text{Li}_a\text{Co}_x\text{M}_y\text{O}_{2-b}\text{A}_b.$$

In Formula 1,

$1.0 \leq a \leq 1.2$, $0 \leq b \leq 0.2$, $0.9 \leq x \leq 1$, $0 \leq y \leq 0.1$, and $x+y=1$,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

$$\text{Formula 2} \qquad Li_aNi_xCo_yM_zO_{2-b}A_b.$$

In Formula 2,

$1.0 \leq a \leq 1.2$, $0 \leq b \leq 0.2$, $0.8 \leq x < 1$, $0 \leq y \leq 0.3$, $0 < z \leq 0.3$, and $x+y+z=1$,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

$$\text{Formula 3} \qquad LiNi_xCo_yMn_zO_2$$

$$\text{Formula 4} \qquad LiNi_xCo_yAl_zO_2.$$

In Formulas 3 and 4, $0.8 \leq x \leq 0.95$, $0 \leq y \leq 0.2$, $0 < z \leq 0.2$, and $x+y+z=1$.

$$\text{Formula 5} \qquad LiNi_xCo_yMn_zAl_wO_2.$$

In Formula 5, $0.8 \leq x \leq 0.95$, $0 \leq y \leq 0.2$, $0 < z \leq 0.2$, $0 < w \leq 0.2$, and $x+y+z+w=1$.

$$\text{Formula 6} \qquad Li_aNi_xMn_yM'_zO_{2-b}A_b.$$

In Formula 6,

$1.0 \leq a \leq 1.2$, $0 \leq b \leq 0.2$, $0 < x \leq 0.3$, $0.5 \leq y < 1$, $0 < z \leq 0.3$, and $x+y+z=1$,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

$$\text{Formula 7} \qquad Li_aM1_xM2_yPO_{4-b}X_b.$$

In Formula 7, $0.90 \leq a \leq 1.1$, $0 \leq x \leq 0.9$, $0 \leq y \leq 0.5$, $0.9 < x+y < 1.1$, and $0 \leq b \leq 2$,

M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof.

$$\text{Formula 8} \qquad Li_aM3_zPO_4.$$

In Formula 8, $0.90 \leq a \leq 1.1$ and $0.9 \leq z \leq 1.1$, and
M3 may be chromium (Cr), manganese (Mn), iron (Fe), cobalt (Co), nickel (Ni), copper (Cu), zirconium (Zr), or a combination thereof.
A cathode according to one or more embodiments may include the composite cathode active material. By

**EP 4 386 888 A1**

including the composite cathode active material, the cathode may provide improved energy density, improved cycling performance, and/or increased conductivity.

As the composite cathode active material includes a second lithium transition metal oxide, which is a primary particle having a particle diameter of 1 $\mu$m or more, the second lithium transition metal oxide may be protected from rapid degradation by side reactions during charging and discharging. Accordingly, the lifespan characteristics of the lithium secondary battery may improve. Further, because the shell of the composite cathode active material includes the second carbon-based material, the composite cathode active material may function as a conductive material as well. Therefore, the amount of a conductive material utilized in the cathode may be reduced. Although the conductive material may be necessary or desirable for improving conductivity of a battery, if (e.g., when)if the amount of the conductive material increases, the mixture density of the cathode decreases, and as a result, the energy density of the lithium battery may decrease. In some embodiments, the cathode of the present disclosure, by utilizing the above-described composite cathode active material, may reduce the amount of the conductive material without an increase in internal resistance. Therefore, as the mixture density of the cathode increases, the energy density of the lithium battery may consequently increase. In particular, in a high-capacity lithium battery, increasing the amount of the composite cathode active material while reducing the amount of the conductive material may result in a significant or desirable increase in the energy density of the lithium battery.

The cathode may be prepared by a wet method, for example. The cathode may be prepared by the method described as an example herein below; however, the method by which to prepare the cathode is not necessarily limited to this method and may be adjusted according to required or desired conditions.

First, a cathode active material composition may be prepared by combining the cathode active material described above, a conductive material, a binder, and a solvent. The prepared cathode active material composition may be directly applied and dried on an aluminum current collector to prepare a cathode plate provided with a cathode active material layer. In some embodiments, a film obtained by casting the cathode active material composition on a separate support and then separating the composition from the support may be laminated on the aluminum current collector to form a cathode plate provided with a cathode active material layer.

As the conductive material, carbon black, graphite fine particles, natural graphite, artificial graphite, acetylene black, Ketjen black, carbon fiber; carbon nanotubes; metal powder, metal fiber or metal tube (such as copper, nickel, aluminum, and/or silver); and/or conductive polymers (such as polyphenylene derivatives) may be utilized, but the present disclosure is not limited thereto. Any suitable conductive material available in the art may be utilized. In some embodiments, the cathode may not contain any conductive material, for example.

As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be utilized, but the present disclosure is not limited thereto. Any suitable binder in the art may be utilized. As the solvent, N-methylpyrrolidone (NMP), acetone, and/or water may be utilized, but the present disclosure is not limited thereto. Any suitable solvent may be utilized.

It is also possible to form pores in the electrode plate by further adding a plasticizer and/or a pore former to the cathode active material composition.

The amount of each of the cathode active material, the conductive material, the binder, and the solvent utilized in the cathode may be at a suitable level to be utilized in lithium batteries. Depending on the intended or desired purpose of utilization and configuration of a lithium battery, one or more of the conductive material, binder, or solvent may not be provided.

The amount of the binder utilized in the cathode may be about 0.1 wt% to about 10 wt%, or about 0.1 wt% to about 5 wt%, relative to the total weight of the cathode active material layer. The amount of the composite cathode active material utilized in the cathode may be about 80 wt% to about 99 wt%, about 90 wt% to about 99 wt%, or about 95 wt% to about 99 wt%, relative to the total weight of the cathode active material layer. The amount of the conductive material utilized in the cathode may be about 0.01 wt% to about 10 wt%, about 0.01 wt% to about 5 wt%, about 0.01 wt% to about 3 wt%, about 0.01 wt% to about 1 wt%, about 0.01 wt% to about 0.5 wt%, about 0.01 wt% to about 0.1 wt%, with respect to the total weight of the cathode active material layer. In some embodiments, the conductive material may not be provided.

Further, the cathode may additionally include a general cathode active material other than the above-described composite cathode active material.

As the general cathode active material, any suitable lithium-containing metal oxide in the art may be utilized without limitation. For example, at least one of the composite oxides of lithium and a metal selected from among cobalt, manganese, nickel, and a combination thereof may be utilized as the lithium-containing metal oxide. For example, the lithium-containing metal oxide may be represented by any one of the following formulae: $Li_aA_{1-b}B_bD_2$ (in the formula, $0.90 \leq a \leq 1$ and $0 \leq b \leq 0.5$); $Li_aE_{1-b}B_bO_{2-c}D_c$ (in the formula, $0.90 \leq a \leq 1$, $0 \leq b \leq 0.5$, and $0 \leq c \leq 0.05$); $LiE_{2-b}B_bO_{4-c}D_c$ (in the formula, $0 \leq b \leq 0.5$ and $0 \leq c \leq 0.05$); $Li_aNi_{1-b-c}Co_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$);

$Li_aNi_{1-b-c}Co_bB_cO_{2-\alpha}F_2$ (in the formula, $0.90 \le a \le 1$, $0 \le b \le 0.5$, $0 \le c \le 0.05$, and $0 < \alpha < 2$); $Li_aNi_{1-b-c}Mn_bB_cD_\alpha$ (in the formula, $0.90 \le a \le 1$, $0 \le b \le 0.5$, $0 \le c \le 0.05$, and $0 < \alpha \le 2$); $Li_aNi_{1-b-c}Mn_bB_cO_{2-\alpha}F_\alpha$ (in the formula, $0.90 \le a \le 1$, $0 \le b \le 0.5$, $0 \le c \le 0.05$, and $0 < \alpha < 2$); $Li_aNi_{1-b-c}Mn_bB_cO_{2-\alpha}F_2$ (in the formula, $0.90 \le a \le 1$, $0 \le b \le 0.5$, $0 \le c \le 0.05$, and $0 < \alpha < 2$); $Li_aNi_bE_cG_dO_2$ (in the formula, $0.90 \le a \le 1$, $0 \le b \le 0.9$, $0 \le c \le 0.5$, and $0.001 \le d \le 0.1$); $Li_aNi_bCo_cMn_dGeO_2$ (in the formula, $0.90 \le a \le 1$, $0 \le b \le 0.9$, $0 \le c \le 0.5$, $0 \le d \le 0.5$, and $0.001 \le e \le 0.1$); $Li_aNiG_bO_2$ (in the formula, $0.90 \le a \le 1$ and $0.001 \le b \le 0.1$); $Li_aCoG_bO_2$ (in the formula, $0.90 \le a \le 1$ and $0.001 \le b \le 0.1$); $Li_aMnG_bO_2$ (in the formula, $0.90 \le a \le 1$ and $0.001 \le b \le 0.1$); $Li_aMn_2G_bO_4$ (in the formula, $0.90 \le a \le 1$ and $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and/or $LiFePO_4$.

In the formulae representing the above-described compounds, A may be nickel (Ni), cobalt (Co), manganese (Mn), or a combination thereof; B may be aluminum (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be Co, Mn, or a combination thereof; F may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I may be Cr, V, Fe, Sc, yttrium (Y), or a combination thereof; and J may be V, Cr, Mn, Co, Ni, copper (Cu), or a combination thereof. A coating layer may be provided on the surface of the above-described compound, and the resulting compound with such coating layer may be utilized, or a mixture of the above-described compound and the compound with a coating layer may be utilized. The coating layer provided on the surface of the above-described compound may include a coating element compound, such as an oxide of a coating element, a hydroxide of a coating element, an oxyhydroxide of a coating element, an oxycarbonate of a coating element, and/or a hydroxycarbonate of a coating element. The compound constituting this coating layer may be amorphous and/or crystalline. The coating element included in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. The method of forming the coating layer may be selected within a range that does not adversely affect (or substantially affect) the physical properties of the cathode active material. The coating method may be, for example, spray coating, a dipping method, and/or the like. A detailed description of the coating method will not be provided as it may be well understood by those in the art.

The cathode current collector may be, for example, in the form of a plate and/or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector may have a thickness of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode electrode current collector may include, for example, a base film and a metal layer provided on one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. The polymer may be an insulator. Because the base film includes an insulating thermoplastic polymer, the base film is softened and/or liquefied to block or reduce the operation of a battery in the case of occurrence of a short circuit, so that a rapid current increase may be inhibited or reduced. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector decrease, so that stability of the lithium battery may improve in the case of a short circuit. A lead tab may be added onto the metal layer for connection with the outside. The lead tab may be welded to the metal layer or a metal layer/base film stack structure by ultrasonic welding, laser welding, spot welding, and/or the like. Because the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, a metal foil and/or a metal mesh. The metal chip may be, for example, an aluminum foil, a copper foil, and/or a stainless steel (SUS) foil. By performing welding after placing the metal chip on the metal layer, the lead tab may be welded to the metal chip/metal layer stack structure or the metal chip/metal layer/base film stack structure. Because the base film, the metal layer, and/or the metal chip melt during welding, the metal layer or metal layer/metal chip stack structure may be electrically connected to the lead tab. A metal chip and/or a lead tab may further be added to the metal layer. The base film may have a thickness of, for example, about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. With the thickness of the base film within any of the above-described ranges, the weight of the electrode assembly may be more effectively or suitably reduced. A melting point of the base film may be, for example, from about 100 °C to about 300 °C, from about 100 °C to about 250 °C, or from about 100 °C to about 200 °C. Because the base film has a melting point within any of the above-described ranges, the base film melts during a process of welding the lead tab and is easily or suitably bound to the lead tab. To improve adhesion between the base film and the metal layer, surface treatment such as corona treatment may be performed on the base film. The thickness of the metal layer may be, for example, from about 0.01 μm to about 3 μm, from about 0.1 μm to about 3 μm, from about 0.1 μm to about 2 μm, or from about 0.1 μm to about 1 μm. With the thickness of the metal layer within any of the above-described ranges, suitable stability of the electrode assembly may be obtained while maintaining conductivity thereof. The thickness of the metal chip may be, for example, from about 2 μm to about 10 μm, from about 2 μm to about 7 μm, or from about 4 μm to about 6 μm. With the thickness of the metal chip within any of the above-described ranges, the metal layer may be more easily or suitably connected to the lead tab. Because the cathode current collector has the above-described structure, the weight of the cathode may be reduced, and the energy density of the cathode and the lithium battery may increase.

A lithium battery according to one or more embodiments may employ a cathode including the above-described composite cathode active material.

By employing the cathode including the composite cathode active material, the lithium battery may provide improved energy density, cycle characteristics and thermal stability.

The lithium battery may be prepared by the method described as an example herein below; however, the method by which to prepare the lithium battery is not necessarily limited to this method and may be adjusted according to required or desired conditions.

First, a cathode may be prepared by the cathode preparation method described above.

Next, an anode may be prepared as follows. The anode may be prepared by substantially the same method as the cathode, except that, for example, an anode active material may be utilized instead of the composite cathode active material. In some embodiments, in an anode active material composition, it is possible to utilize substantially the same conductive agent, binder, and solvent as those utilized for the cathode.

For example, the anode active material composition may be prepared by mixing an anode active material, a conductor, a binder, and a solvent, and the prepared anode active material composition may be directly coated on a copper current collector to prepare an anode plate. In some embodiments, the prepared anode active material composition may be cast on a separate support, and an anode active material film exfoliated from the support may be laminated on a copper current collector to prepare an anode plate.

The anode active material may be any suitable material utilized as an anode active material in a lithium battery. For example, the anode active material may include at least one selected from among lithium metal, a metal alloyable with lithium, a transition metal oxide, a non-transition metal oxide, and a carbon-based material. Examples of the metal alloyable with lithium may include Si, Sn, Al, Ge, Pb, Bi, Sb, a Si-Y alloy (wherein Y is an alkali metal, an alkaline earth metal, an element of Group 13, an element of Group 14, a transition metal, a rare earth metal, or a combination thereof, but not Si), a Sn-Y alloy (wherein Y is an alkali metal, an alkaline earth metal, an element of Group 13, an element of Group 14, a transition metal, a rare earth metal, or a combination thereof, but not Sn) and/or the like. For example, Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. Examples of the transition metal oxide may include a lithium titanium oxide, a vanadium oxide, a lithium vanadium oxide, and/or the like. The non-transition metal oxide may be, for example, $SnO_2$, $SiO_x$ (0<x<2), and/or the like. Examples of the carbon-based material may include a crystalline carbon, an amorphous carbon, or a mixture thereof. Examples of the crystalline carbon may include graphite, such as artificial graphite and/or natural graphite in shapeless, plate, flake, spherical and/or fiber form. Examples of the amorphous carbon may include soft carbon (low-temperature calcined carbon), hard carbon, mesophase pitch carbides, calcined cokes, and/or the like.

The amount of each of the anode active material, the conductive material, the binder, and the solvent may be at a suitable level to be utilized in a lithium battery. Depending on the intended or desired purpose of utilization and configuration of a lithium battery, one or more of the conductive material, binder, or solvent may not be provided.

The amount of the binder utilized in the anode may be, for example, about 0.1 wt% to about 10 wt%, or about 0.1 wt% to about 5 wt% with respect to the total weight of the anode active material layer. The amount of the conductive material utilized in the anode may be, for example, about 0.1 wt% to about 10 wt%, or about 0.1 wt% to about 5 wt% with respect to the total weight of the anode active material layer. The amount of the anode active material utilized in the anode may be, for example, about 80 wt% to about 99 wt%, about 90 wt% to about 99 wt%, or about 95 wt% to about 99 wt%, with respect to the total weight of the anode active material layer. If (e.g., when) the anode active material is lithium metal, the anode may not include a (e.g., may exclude any) binder and/or conductive material.

The anode current collector may be formed of, for example, a material that does not react with (e.g., a material that does not form an alloy and/or compound with) lithium. The material constituting the anode current collector may be, for example, copper (Cu), stainless steel (SUS), titanium (Ti), iron (Fe), cobalt (Co), and/or nickel (Ni), but is not limited thereto, and any suitable materials may also be utilized as electrode current collectors. The anode current collector may be formed of one metal selected from those described above or an alloy and/or coated material of two or more metals. The anode current collector may be, for example, in the form of a plate and/or a foil.

The anode current collector may include, for example, a base film and a metal layer provided on one side or both (e.g., simultaneously) sides of the base film. The base film may include, for example, a polymer. The polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. The polymer may be an insulating polymer. Because the base film includes an insulating thermoplastic polymer, the base film is softened and/or liquefied to block or reduce the operation of a battery in the case of occurrence of a short circuit, so that a rapid current increase may be inhibited or reduced. The metal layer may include, for example, copper (Cu), stainless steel, titanium (Ti), iron (Fe), cobalt (Co), nickel (Ni), or an alloy thereof. The anode current collector may further include a metal chip and/or a lead tab. For more detailed descriptions of the base film, the metal layer, the metal chip, and the lead tab of the anode current collector, refer to the cathode current collector. Because the anode current collector has the above-described structure, the weight of the anode may be reduced, and accordingly, energy density of the anode and the lithium battery may increase.

Next, a separator to be positioned between the cathode and the anode may be prepared.

The separator may be any suitable separator to be utilized in a lithium battery. For the separator, for example, any suitable separator capable of retaining a large quantity of electrolytes while exhibiting low resistance to ion migration in electrolytes may be utilized. For example, the separator may be formed of a material selected from among glass fiber, polyester, Teflon, polyethylene, polypropylene, polytetrafluoroethylene (PTFE), or a combination thereof that is in the form of nonwoven fabric and/or woven fabric. A lithium-ion battery may utilize, for example, a rollable separator formed of polyethylene, polypropylene, and/or the like. A lithium ion polymer battery may utilize, for example, a separator capable of retaining a large quantity of an organic electrolyte solution.

The separator may be prepared by the method described as an example herein below; however, the method by which to prepare the separator is not necessarily limited to this method and may be adjusted according to required or desired conditions.

First, a separator composition may be prepared by mixing a polymer resin, a filler, and a solvent. The separator composition may be directly coated and dried on top of an electrode to thereby form a separator. In some embodiments, the separator may be formed by casting and drying the separator composition on a support and then laminating a separator film exfoliated from the support on top of an electrode.

The polymer utilized in the preparation of the separator is not particularly limited, and any suitable polymer as a binder of an electrode plate may be utilized. For example, the polymer may utilize a vinylidene fluoride/hexafluoropropylene copolymer, polyvinylidene fluoride (PVDF), polyacrylonitrile, polymethyl methacrylate, or a mixture thereof.

Next, an electrolyte may be prepared.

The electrolyte may be, for example, an organic electrolyte solution. The organic electrolyte solution may be prepared by dissolving a lithium salt in an organic solvent.

For the organic solvent, any suitable organic solvent may be utilized. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

For the lithium salt, any suitable lithium salt may be utilized. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each a natural number of 1 to 20), $LiCl$, $LiI$ or a mixture thereof.

In some embodiments, the electrolyte may be a solid electrolyte. The solid electrolyte may be, for example, a boron oxide, a lithium oxynitride, and/or the like, but is not limited thereto, and may be any suitable solid electrolyte. The solid electrolyte may be formed on the anode by one or more suitable methods such as sputtering, for example, or a separate solid electrolyte sheet may be placed on the anode.

The solid electrolyte may be, for example, an oxide-based solid electrolyte and/or a sulfide-based solid electrolyte.

The solid electrolyte may be, for example, an oxide-based solid electrolyte. The oxide-based solid electrolyte may be at least one selected from among $Li_{1+x+y}Al_xTi_{2-x}Si_yP_{3-y}O_{12}$ (0<x<2 and 0≤y<3), $BaTiO_3$, $Pb(Zr,Ti)O_3$ (PZT), $Pb_{1-x}La_xZr_{1-y}Ti_yO_3$ (PLZT) (0≤x<1 and 0≤y<1 ), $PB(Mg_3Nb_{2/3})O_3$-$PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1), $Li_xLa_yTiO_3$ (0<x<2 and 0<y<3), $Li_2O$, $LiOH$, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (M = Te, Nb, or Zr, and x is an integer of 1 to 10). The solid electrolyte may be prepared by a sintering method and/or the like. For example, the oxide-based solid electrolyte may be a garnet-type or kind solid electrolyte selected from among $Li_7La_3Zr_2O_{12}$ (LLZO) and $Li_{3+x}La_3Zr_{2-a}M_aO_{12}$ (M-doped LLZO wherein M=Ga, W, Nb, Ta, or Al, and x is an integer of 1 to 10).

Examples of the sulfide-based solid electrolyte may include lithium sulfide, silicon sulfide, phosphorus sulfide, boron sulfide, or a combination thereof. Sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ and/or $P_2S_5$. The sulfide-based solid electrolyte particles are suitable to have a higher lithium ion conductivity than that of other inorganic compounds. For example, the sulfide-based solid electrolyte may include $Li_2S$ and/or $P_2S_5$. If (e.g., when) sulfide solid electrolyte materials constituting the sulfide-based solid electrolyte include $Li_2S$-$P_2S_5$, a mixing molar ratio of $Li_2S$ to $P_2S_5$ may be, for example, in a range of about 50:50 to about 90:10. In some embodiments, a material such as $Li_3PO_4$, a halogen, a halogen compound, $Li_{2+2x}Zn_{1-x}GeO_4$ ("LISICON", $0 \leq x < 1$), $Li_{3+y}PO_{4-x}N_x$ ("LIPON", $0 < x < 4$ and $0 < y < 3$), $Li_{3.25}Ge_{0.25}P_{0.75}S_4$ ("Thio-LISICON"), and/or $Li_2O$-$Al_2O_3$-$TiO_2$-$P_2O_5$ ("LATP") may be added to an inorganic solid electrolyte such as $Li_2S$-$P_2S_5$, $SiS_2$, $GeS_2$, $B_2S_3$, or a combination thereof, to prepare an inorganic solid electrolyte, and this inorganic solid electrolyte may be utilized as a sulfide solid electrolyte. Non-limiting examples of the sulfide solid electrolyte materials may include $Li_2S$-$P_2S_5$; $Li_2S$-$P_2S_5$-LiX (X=a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$ZmS_n$ ($0 < m < 10$, $0 < n < 10$, Z=Ge, Zn or Ga); $Li_2S$-$GeS_2$; $Li_2S$-$SiS_2$-$Li_3PO_4$; and $Li_2S$-$SiS_2$-$Li_pMO_q$ ($0 < p < 10$, $0 < q < 10$, M=P, Si, Ge, B, Al, Ga or In). In this regard, the sulfide-based solid electrolyte material may be prepared by subjecting a starting material (e.g., $Li_2S$, $P_2S_5$, etc.) of the sulfide-based solid electrolyte material to a treatment such as a melt quenching method, a mechanical milling method, and/or the like. In some embodiments, a calcination process may be performed following the above treatment. The sulfide-based solid electrolyte may be amorphous or crystalline, or may be in a mixed state thereof.

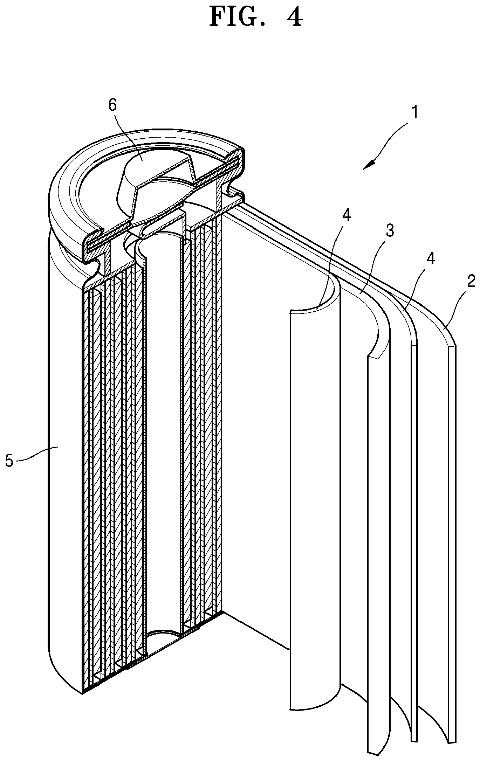

Referring to FIGs. 4 to 6, a lithium battery 1 according to embodiments may include a cathode 3, an anode 2, and a separator 4. The cathode 3, the anode 2, and the separator 4 may be wound or folded to form a battery structure 7. The formed battery structure 7 may be accommodated in a battery case 5. The battery case 5 may be injected with an organic electrolyte solution and sealed with a cap assembly 6, thereby completing the preparation of a lithium battery 1. The battery case 5 may have a cylindrical shape, but is not necessarily limited thereto, and may have a polygonal shape, a thin-film shape, and/or the like.

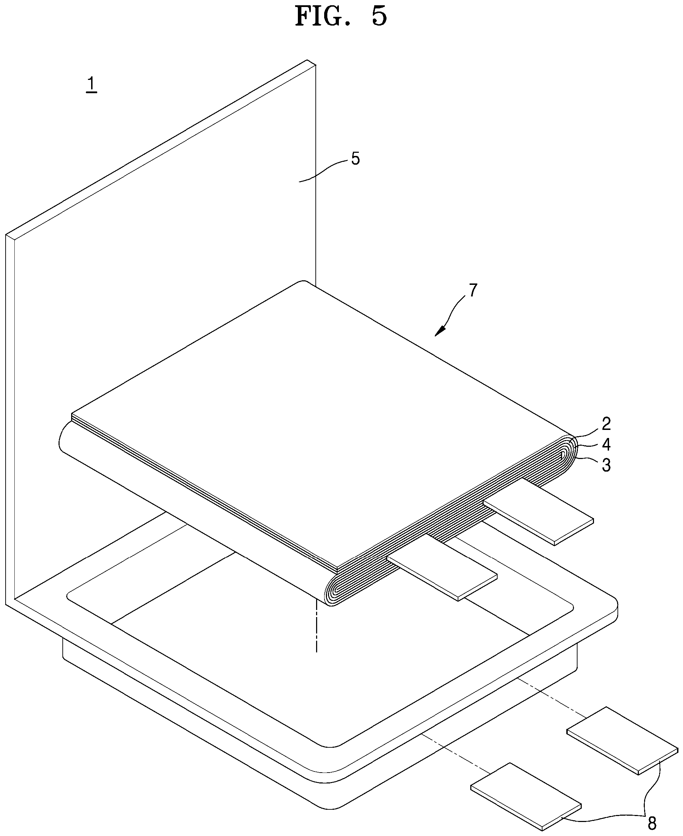

Referring to FIG. 5, a lithium battery 1 according to embodiments may include a cathode 3, an anode 2, and a separator 4. The separator 4 may be provided between the cathode 3 and the anode 2, and the cathode 3, the anode 2, and the separator 4 may be wound or folded to form a battery structure 7. The battery structure 7 may be accommodated in a battery case 5. An electrode tab 8, acting as an electrical path for guiding an electrical current generated in the battery structure 7 to the outside, may be included. The battery case 5 may be injected with an organic electrolyte solution and sealed to thereby complete the preparation of the lithium battery 1. The battery case 5 may have a polygonal shape, but without being necessarily limited thereto, may also have a cylindrical shape, a thin-film shape, and/or the like, for example.

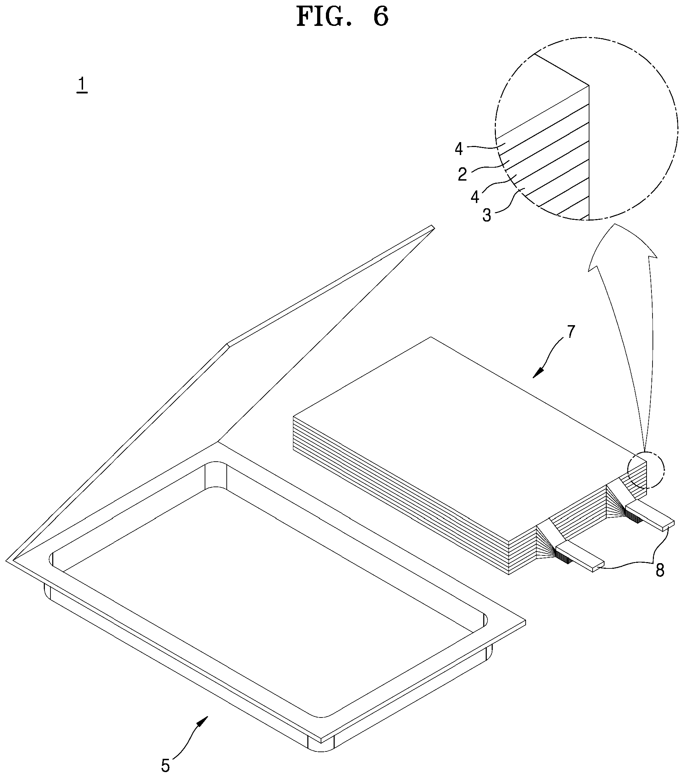

Referring to FIG. 6, a lithium battery 1 according to embodiments may include a cathode 3, an anode 2, and a separator 4. The separator 4 may be provided between the cathode 3 and the anode 2 to form a battery structure 7. The battery structure 7 may be stacked in a bi-cell structure and then accommodated into the battery case 5. An electrode tab 8, acting as an electrical path for guiding an electrical current generated in the battery structure 7 to the outside, may be included. The battery case 5 may be injected with an organic electrolyte solution and sealed to thereby complete the preparation of the lithium battery 1. The battery case 5 may have a polygonal shape, but without being necessarily limited thereto, may also have a cylindrical shape, a thin-film shape, and/or the like, for example.

A pouch-type or kind lithium battery corresponds to the lithium battery shown in FIGS. 4 to 6 utilizing a pouch as a battery case. The pouch-type or kind lithium battery may include one or more battery structures. The battery structure may be formed by providing a separator between a cathode and an anode. The battery structures may be stacked in a bi-cell structure, and immersed in an organic electrolyte solution, and then accommodated and sealed in a pouch, thereby completing the preparation of a pouch-type or kind lithium battery. For example, in some embodiments, the cathode, anode, and separator described above may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte solution and then sealed, thereby completing the preparation of a lithium battery.

The lithium battery, due to having excellent or suitable lifespan characteristics and/or high-rate capability, may be utilized in an electric vehicle (EV), for example. For example, the lithium battery may be utilized in a hybrid vehicle, such as a plug-in hybrid electric vehicle (PHEV) and/or the like. Also, the lithium battery may be utilized in any suitable field that requires or desires a large amount of energy storage. For example, the lithium battery may be utilized in an electric bicycle, a power tool, and/or the like.

Multiple units of the lithium battery may be stacked together to form a battery module, and multiple units of the battery module may form a battery pack. Such a battery pack may be utilized in all types (or kinds) of devices in which high capacity and high output are required or desired. For example, the battery pack may be utilized in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

A method of preparing a composite cathode active material according to one or more embodiments may include: preparing a 1st core/shell structure obtained by mechanically milling a first lithium transition metal oxide, a composite, and a second carbon-based material; preparing a 2nd core/shell structure obtained by mechanically milling a second lithium transition metal oxide, a composite, and a second carbon-based material; and preparing a composite cathode active material by mixing the 1st core/shell structure and the 2nd core/shell structure, wherein the composite may include a first metal oxide (e.g., at least one first metal oxide) represented by $M_aO_b$ ($0<a\leq3$ and $0<b<4$, wherein if (e.g., when) a is 1, 2, or 3, b is not an integer), and a first carbon-based material, the first metal oxide may be provided in a matrix of the first carbon-based material, M may be at least one metal selected from among Groups 2 to 13, 15, and 16 of the periodic table of elements, the second carbon-based material may include a fibrous carbon-based material having an aspect ratio of 10 or more, the first lithium transition metal oxide and the second lithium transition metal oxide may have a different particle diameter from each other, the first lithium transition metal oxide may include a primary particle having a particle diameter of 3 $\mu$m or more, and the second lithium transition metal oxide may include a primary particle having a particle diameter of 1 $\mu$m or more.

A first lithium transition metal oxide may be provided. For example, the first lithium transition metal oxide may be a compound represented by at least one selected from among Formulae 1 to 8 above. A second lithium transition metal oxide may be provided. For example, the second lithium transition metal oxide may be a compound represented by at least one selected from among Formulae 1 to 8 above. The first lithium transition metal oxide and the second lithium transition metal oxide have a different particle diameter from each other. For example, the first lithium transition metal oxide may have a larger particle diameter than that of the second lithium transition metal oxide. The second lithium transition metal oxide may be a one-body particle, for example, a primary particle with a particle diameter of 1 $\mu$m or more.

A composite may be provided. The providing a composite may include, for example, supplying a reaction gas including (e.g., consisting of) a carbon source gas to a structure including a metal oxide, and conducting a heat-treatment to provide the composite. The providing a composite may include, for example, supplying a reaction gas including (e.g., consisting of) a carbon source gas to at least one second metal oxide represented by $M_aO_c$ ($0<a\leq3$ and $0<c\leq4$, wherein if (e.g., when) a is 1, 2, or 3, b is an integer) and conducting a heat-treatment to prepare the composite, wherein M may be at least one metal selected from among elements of Groups 2 to 13, 15, and 16 of the periodic table.

The carbon source gas may be a gas including (e.g., consisting of) a compound represented by Formula 9, or may be a mixed gas containing at least one selected from among a compound represented by Formula 9, a compound represented by Formula 10, and an oxygen-containing gas represented by Formula 11:

$$\text{Formula 9} \qquad C_nH_{(2n+2-a)}[OH]_a.$$

In Formula 9, n may be 1 to 20, and a may be 0 or 1;

$$\text{Formula 10} \qquad C_nH_{2n}.$$

In Formula 10, n may be 2 to 6; and

$$\text{Formula 11} \qquad C_xH_yO_z.$$

In Formula 11, x may be 0 or an integer of 1 to 20, y may be 0 or an integer of 1 to 20, and z may be 1 or 2.

The compound represented by Formula 9 and the compound represented by Formula 10 may be one or more selected from among methane, ethylene, propylene, methanol, ethanol, and propanol. An oxygen-containing gas represented by Formula 11 may include, for example, carbon dioxide ($CO_2$), carbon monoxide (CO), water vapor ($H_2O$), or a mixture thereof.

After the supplying of a reaction gas including (e.g., consisting of) a carbon source gas to a second metal oxide represented by $M_aO_c$ ($0<a\leq3$ and $0<c\leq4$, wherein if (e.g., when) a is 1, 2, or 3, c is an integer) and conducting a heat treatment, there may be a cooling process further performed utilizing at least one inert gas selected from among nitrogen, helium, and argon. The cooling process may refer to a process of adjusting a temperature to room temperature (20 °C to 25 °C). The carbon source gas may include at least one inert gas selected from among nitrogen, helium, and argon.

In the method of preparing a composite, the process of growing a carbon-based material, e.g., graphene, may be carried out under one or more suitable conditions according to a gas-phase reaction.

According to a first condition, for example, methane may be first supplied to a reactor loaded with a second metal oxide represented by $M_aO_c$ ($0<a\leq3$ and $0<c\leq4$, wherein if (e.g., when) a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. At the heat treatment temperature (T), the heat treatment may be carried out for the duration of a reaction time. The reaction time may be, for example, about 4 hours to about 8 hours. The heat-treated product may be cooled to room temperature to produce a composite. The process of cooling from the heat treatment temperature (T) to room temperature may take, for example, about 1 hour to about 5 hours.

According to a second condition, for example, hydrogen may be first supplied to a reactor loaded with a second metal oxide represented by $M_aO_c$ (0<a≤3 and 0<c≤4, wherein if (e.g., when) a is 1, 2, or 3, c is an integer) before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a reaction time at the heat treatment temperature (T), methane gas may be supplied and the heat treatment may be carried out for the remainder of the reaction time. The reaction time may be, for example, about 4 hours to about 8 hours. The heat-treated product may be cooled to room temperature to produce a composite. Nitrogen may be supplied during the process of cooling. The time taken for the process of cooling from a heat-treatment temperature (T) to room temperature may be, for example, about 1 hour to about 5 hours.

According to a third condition, for example, hydrogen may be first supplied to a reactor loaded with a second metal oxide represented by $M_aO_c$ (0<a≤3 and 0<c≤4, wherein if (e.g., when) a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a reaction time at the heat treatment temperature (T), a mixed gas of methane and hydrogen may be supplied and the heat treatment may be carried out for the remainder of the reaction time. The reaction time may be, for example, about 4 hours to about 8 hours. The heat-treated product may be cooled to room temperature to produce a composite. Nitrogen may be supplied during the cooling process. The time taken for the process of cooling from a heat-treatment temperature (T) to room temperature may be, for example, about 1 hour to about 5 hours.

If (e.g., when) the carbon source gas includes water vapor in the process of producing the composite, the composite with excellent or suitable conductivity may be obtained. The content (e.g., amount) of water vapor in the gas mixture is not limited and may be, for example, about 0.01 vol% to about 10 vol%, relative to 100 vol% of the total volume of the carbon source gas. For example, the carbon source gas may be methane; a mixed gas containing methane and an inert gas; or a mixed gas containing methane and an oxygen-containing gas.

For example, the carbon source gas may be (1) methane; (2) a mixed gas of methane and carbon dioxide; or (3) a mixed gas of methane, carbon dioxide and water vapor. In (2) the mixed gas of methane and carbon dioxide, the molar ratio of methane to carbon dioxide may be about 1:0.2 to about 1:0.5, about 1:0.25 to about 1:0.45, or about 1:0.3 to about 1:0.4. In (3) the mixed gas of methane, carbon dioxide, and water vapor, the molar ratio of methane, carbon dioxide, and water vapor may be about 1 (methane): 0.2 (carbon dioxide) to 0.5: 0.01 to 1.45 (water vapor), may be about 1: 0.25 to 0.45: 0.1 to 1.35, or may be about 1: 0.3 to 0.4: 0.5 to 1.

The carbon source gas may be, for example, carbon monoxide and/or carbon dioxide. The carbon source gas may be, for example, a mixed gas of methane and nitrogen. In the mixed gas of methane and nitrogen, the molar ratio of methane to nitrogen may be about 1: 0.2 to 1: 0.5, about 1: 0.25 to 1: 0.45, or about 1: 0.3 to 1: 0.4. The carbon source gas may not include (e.g., may exclude) an inert gas such as nitrogen.

A heat treatment pressure may be selected in consideration of a heat treatment temperature, the composition of a gas mixture, a desired or suitable amount of carbon coating, and/or the like. The heat treatment pressure may be controlled or selected by adjusting the incoming amount of the gas mixture and the outgoing amount of the gas mixture. The heat-treatment pressure may be, for example, 0.5 atm or more, 1 atm or more, 2 atm or more, 3 atm or more, 4 atm or more, or 5 atm or more. The heat-treatment pressure may be, for example, about 0.5 atm to about 10 atm, about 1 atm to about 10 atm, about 2 atm to about 10 atm, about 3 atm to about 10 atm, about 4 atm to about 10 atm, or about 5 atm to about 10 atm.

A heat treatment time is not particularly limited and may be appropriately adjusted according to a heat treatment temperature, a heat treatment pressure, the composition of a gas mixture, and a desired or suitable amount of carbon coating. For example, the reaction time at the heat treatment temperature may be, for example, about 10 minutes to about 100 hours, about 30 minutes to about 90 hours, or about 50 minutes to about 40 hours. For example, as the heat-treatment time increases, the amount of deposited carbon, for example, graphene (carbon), increases, and therefore, the electrical properties of the composite may be improved. It should be noted that this trend may not necessarily be directly proportional to time. For example, after a certain period of time, carbon deposition, for example, graphene deposition may no longer take place or the deposition rate may decrease.

Through a gas-phase reaction of the carbon source gas described above, even at relatively low temperatures, the composite may be obtained by providing substantially uniform coating of a carbon-based material, e.g., graphene coating, to at least one selected from among a second metal oxide represented by $M_aO_c$ ($0<a\leq3$ and $0<c\leq4$, wherein if (e.g., when) a is 1, 2, or 3, c is an integer) and a reduction product thereof, a first metal oxide represented by $M_aO_b$ ($0<a\leq3$ and $0<b<4$, wherein if (e.g., when) a is 1, 2, or 3, b is not an integer).

The composite may include, for example, a matrix of a carbon-based material, e.g., a graphene matrix, which has at least one structure selected from among a spherical structure, a spiral structure having a plurality of spherical structures connected to one another, a cluster structure having a plurality of spherical structures agglomerated, and a sponge structure; and at least one selected from among a first metal oxide represented by $M_aO_b$ ($0<a\leq3$ and $0<b<4$, wherein if (e.g., when) a is 1, 2, or 3, b is not an integer) and a second metal oxide represented by $M_aO_c$ ($0<a\leq3$ and $0<c\leq4$, wherein if (e.g., when) a is 1, 2, or 3, c is an integer), which is provided within the graphene matrix.

Next, a 1st core/shell structure may be prepared by mechanically milling the first lithium transition metal oxide and the composite. For the milling, a Nobilta mixer (Hosokawa Micron BV) and/or the like may be utilized. The rotation rate of the mixer during the milling may be, for example, 1,000 rpm to 5,000 rpm. The milling time may be, for example, about 5 minutes to about 100 minutes. The average particle diameter (D50) of a second composite utilized for mechanical milling of the first lithium transition metal oxide and the composite may be, for example, about 50 nm to about 200 nm, about 100 nm to about 300 nm, or about 200 nm to about 500 nm. The milling method utilized in the mechanical milling process is not particularly limited, and may be any suitable method that can bring a lithium transition metal oxide and a composite into contact with each other by mechanical means or members.

Further, the 2nd core/shell structure may be prepared by mechanically milling a second lithium transition metal oxide and a composite. The 2nd core/shell structure may be prepared utilizing the same process as in the preparation method of the 1st core/shell structure, except that the second lithium transition metal oxide is utilized instead of the first lithium transition metal oxide.

Next, a composite cathode active material may be prepared by mixing the 1st core/shell structure with the second lithium metal oxide. The mixing of the 1st core/shell structure and the second lithium transition metal oxide may be, in a weight ratio, for example, about 90:10 to about 60:40, about 85:15 to about 65:35, or about 80:20 to about 70:30. As the 1st core/shell structure and the second lithium transition metal oxide have a weight ratio in any of the above ranges, the energy density and/or cycle characteristics of a lithium battery including the composite cathode active material may further improve.

The present disclosure will be described in greater detail through Examples and Comparative Examples. However, it will be understood that the following examples are provided merely to illustrate the present disclosure, and should not be construed as limiting the scope of the present disclosure.

**Preparation of Composite**

**Preparation Example 1: $Al_2O_3$@Gr Composite**

$Al_2O_3$ particles (average particle diameter: about 20 nm) were loaded into a reactor, and with $CH_4$ being supplied into the reactor at 300 sccm and 1 atm for about 30 minutes, the temperature inside the reactor was elevated to 1,000 °C. Subsequently, a heat treatment was performed while maintaining the above temperature for 7 hours. Then, the temperature inside the reactor was adjusted to room temperature (20-25 °C) to obtain a composite in which $Al_2O_3$ particles and its reduction product $Al_2O_z$ ($0<z<3$) particles, are embedded in graphene.

The content (e.g., amount) of alumina included in the composite was 60 wt%.

**Comparative Preparation Example 1: $SiO_2$@Gr Composite**

$SiO_2$ particles (average particle diameter: about 15 nm) were loaded into a reactor, and with $CH_4$ being supplied into the reactor at 300 sccm and 1 atm for about 30 minutes, the temperature inside the reactor was elevated to 1,000 °C. Subsequently, a heat treatment was performed while maintaining the above temperature for 7 hours. Then, the temperature inside the reactor was adjusted to room temperature (20 °C to 25 °C) to produce a composite in which $SiO_2$ particles and a reduction product thereof, $SiO_y$ ($0<y<2$) particles, were embedded in graphene.

**Preparation of Composite Cathode Active Material**

**Example 1: 0.025 wt% $Al_2O_3$@Gr Composite and 0.025 wt% CNT-coated large-diameter one-body particle LCO, and 0.025 wt% $Al_2O_3$@Gr Composite and 0.025 wt% CNT-coated small-diameter one-body particle LCO**

Large-diameter $LiCoO_2$ having an average particle diameter of 6 $\mu$m (hereinafter, referred to as large-diameter LCO), the composite prepared in Preparation Example 1, and carbon nanotubes (hereinafter referred to as CNT) were milled together utilizing a Nobilta mixer (Hosokawa Micron BV), for about 5-30 minutes at a rotation rate of about 1,000 rpm to about 2,000 rpm, to obtain a 1st core/shell structure. The mixing weight ratio of the large-diameter LCO, the composite obtained in Preparation Example 1, and the CNT was 99.95: 0.025: 0.025. The large-diameter LCO has one-body particle shape and is a particle having a single-crystal structure.

Small-diameter $LiCoO_2$ having an average particle diameter of 2 $\mu$m (hereinafter, referred to as small-diameter LCO) and the composite prepared in Preparation Example 1 were milled together, utilizing a Nobilta mixer (Hosokawa Micron BV), for about 5-30 minutes at a rotation rate of about 1,000 rpm to about 2,000 rpm, to obtain a 2nd core/shell structure. The mixing weight ratio of the small-diameter LCO, the composite obtained in Preparation Example 1, and the CNT was 99.95: 0.025: 0.025. The small-diameter LCO has one-body particle shape and is a particle having a single-crystal structure.

A composite cathode active material was prepared by mixing the 1st core/shell structure and the 2nd core/shell structure in a weight ratio of 7:3.

By measuring the particle size distribution with a particle size analyzer (PSA), it was confirmed that the composite cathode active material had a bimodal particle size distribution.

As shown in FIG. 2, it was found that carbon nanotubes are provided on the surface of the large-particle LCO primary particle of the 1st core/shell structure. The carbon nanotubes included a primary carbon nanotube structure and a secondary carbon nanotube structure formed by agglomeration of a plurality of carbon nanotube units. The primary carbon nanotube structure may include (e.g., consist of) one carbon nanotube unit. The length of the carbon nanotube unit was from 200 nm to 300 nm, and the diameter of the carbon nanotubes was about 10 nm. The secondary carbon nanotube structure was formed by agglomeration of a plurality of carbon nanotube units. The secondary carbon nanotube structure had a length of 500 nm or more, and a diameter of about 40 nm.

It was also found that the carbon nanotubes are provided on the surface of the small-diameter LCO one-body particle of the 2nd core/shell structure. The carbon nanotubes included the primary carbon nanotube structure.

**Example 2: 0.02 wt% $Al_2O_3$@Gr Composite and 0.03 wt% CNT-coated large-diameter one-body particle LCO, and 0.02 wt% $Al_2O_3$@Gr Composite and 0.03 wt% CNT-coated small-diameter one-body particle LCO**

A composite cathode active material was prepared following substantially the same process as in Example 1, except that the mixing ratio of the composite and the CNT was changed from 0.025:0.025 to 0.02:0.03.

**Example 3: 0.04 wt% $Al_2O_3$@Gr Composite and 0.01 wt% CNT coated large-diameter one-body particle LCO, and 0.04 wt% $Al_2O_3$@Gr Composite and 0.01 wt% CNT-coated small-diameter one-body particle LCO**

A composite cathode active material was prepared following substantially the same process as in Example 1, except that the mixing ratio of the composite and the CNT was changed from 0.025:0.025 to 0.04:0.01.

**Example 4: 0.01 wt% $Al_2O_3$@Gr Composite and 0.04 wt% CNT-coated large-diameter LCO, and 0.01 wt% $Al_2O_3$@Gr Composite and 0.04 wt% CNT-coated small-diameter one-body particle LCO**

A composite cathode active material was prepared following substantially the same process as in Example 1, except that the mixing ratio of the composite and the CNT was changed from 0.025:0.025 to 0.01:0.04.

**Comparative Example 1: Bare large-diameter one-body particle LCO, and bare small-diameter one-body particle LCO**

A composite cathode active material was prepared following substantially the same process as Example 1, except that the large-diameter LCO (e.g., NCA91) was utilized as is instead of the 1st core/shell structure, and the small-diameter LCO was utilized as is instead of the 2nd core/shell structure.

**Comparative Example 2: Large-diameter one-body particle LCO coated with 0.025 wt% $Al_2O_3$@Gr Composite alone, and small-diameter one-body particle LCO coated with 0.025 wt% $Al_2O_3$@Gr alone**

A composite cathode active material was prepared following substantially the same process as in Example 1, except that the mixing ratio of the composite and the CNT was changed from 0.025:0.025 to 0.025:0.

**Comparative Example 3: Large-diameter one-body particle LCO coated with 0.05 wt% $Al_2O_3$@Gr Composite alone, and small-diameter one-body particle LCO coated with 0.05 wt% $Al_2O_3$@Gr Composite alone**

A composite cathode active material was prepared following substantially the same process as in Example 1, except that the mixing ratio of the composite and the CNT was changed from 0.025:0.025 to 0.05:0.

**Comparative Example 4: Large-diameter one-body particle LCO coated with 0.1 wt% Al$_2$O$_3$@Gr Composite alone, and small-diameter one-body particle LCO coated with 0.1 wt% Al$_2$O$_3$@Gr Composite alone**

A composite cathode active material was prepared following substantially the same process as in Example 1, except that the mixing ratio of the composite and the CNT was changed from 0.025:0.025 to 0.1:0.

**Reference Example 1: 0.025 wt% Al$_2$O$_3$@Gr Composite and 0.025 wt% CN-coated large-diameter one-body particle LCO, and 0.025 wt% Al$_2$O$_3$@Gr Composite and 0.025 wt% CNT-coated small-diameter secondary particle LCO**

A composite cathode active material was prepared following substantially the same process as in Example 1, except that a small-diameter LCO, which is a secondary particle formed by agglomeration of a plurality of primary particles, was utilized instead of the small-diameter LCO that is one-body particle.

**Comparative Example 5: 0.025 wt% SiO$_2$@Gr Composite and 0.025 wt% CNT-coated large-particle LCO, and 0.025 wt% SiO$_2$@Gr Composite and 0.025 wt% CNT-coated small-diameter one-body particle LCO**

A composite cathode active material was prepared following substantially the same process as Example 1, except that the SiO$_2$@Gr composite prepared in Comparative Preparation Example 1 was utilized instead of the Al$_2$O$_3$@Gr composite prepared in Preparation Example 1.

**Preparation of Lithium Battery Half Cell**

**Example 5**

**Preparation of Cathode**

The composite cathode active material prepared in Example 1, a carbon conductive material, and polyvinylidene fluoride (PVdF) were mixed in a weight ratio of 99:0.5:0.5, and the resulting mixture was mixed with N-methylpyrrolidone (NMP) utilizing agate mortar and pestle, to prepare a slurry.
The carbon conductive material utilized was a mixture containing carbon nanotubes (CNT) and Ketjenblack (ECP) in a weight ratio of 7:3.
The slurry was bar-coated on a 15 μm-thick aluminum current collector dried at room temperature and dried again under vacuum at 120 °C, followed by rolling and punching, to prepare a 70 μm-thick cathode.

**Preparation of Coin Cells**

Using the cathode prepared above, and utilizing lithium metal as a counter electrode, a PTFE separator, and a solution containing 1.5 M LiPF$_6$ dissolved in ethylene carbonate (EC) + ethylmethyl carbonate (EMC) + dimethyl carbonate (DMC) (at a volume ratio of 2:2:6) as an electrolyte, a coin cell was prepared.

**Examples 6 to 8**

Coin cells were prepared following substantially the same process as Example 5, except that the composite cathode active materials prepared in Examples 2 to 4 were utilized, respectively, instead of the composite cathode active material prepared in Example 1.

**Comparative Examples 6 to 10, Reference Example 2**

Coin cells were prepared following substantially the same process as Example 5, except that the composite cathode active materials prepared in Comparative Examples 1 to 5 and Reference Example 1 were utilized, respectively, instead of the composite cathode active material prepared in Example 1.

**Evaluation Example 1: Evaluation of XPS Spectra**

In the preparation process of the composite prepared in Preparation Example 1, XPS spectra were measured utilizing a Quantum 2000 (Physical Electronics) over time. XPS spectra of C 1s orbital and Al 2p orbital of each sample before temperature elevation, and at 1 minute, 5 minutes, 30 minutes, 1 hour, and 4 hours after temperature elevation were obtained. At the beginning of temperature elevation, the XPS spectrum only showed Al 2p peaks but did not show C 1s peaks. After 30 minutes, C 1s peaks appeared clearly, and the size of Al 2p peak was significantly reduced.

After 30 minutes, C 1s peaks attributable to C-C bonds and C=C bonds due to graphene growth appeared clearly around 284.5 eV.

Because the oxidation number of aluminum decreases as the reaction time increases, the peak position of the Al 2p orbital was shifted toward a lower binding energy (eV).

Accordingly, it was found, without being bound by any particular theory that as the reaction progressed, graphene was grown on $Al_2O_3$ particles, and $Al_2O_x$ (0<x<3), which is a reduction product of $Al_2O_3$, was produced.

The average contents of carbon and aluminum were measured through XPS analysis results in 10 regions of the composite sample prepared in Preparation Example 1. With respect to the measurement results, a deviation of the aluminum content (e.g., amount) for each region was calculated. The deviation of the aluminum content (e.g., amount) was expressed as a percentage of the average value, and this percentage was referred to as uniformity. The percentage of the average value of the deviation of the aluminum content (e.g., amount), that is, the uniformity of the aluminum content (e.g., amount) was 1%. Therefore, it was found that alumina was uniformly (e.g., substantially uniformly) distributed in the composite prepared in Preparation Example 1.

**Evaluation Example 2: SEM, HR-TEM and SEM-EDS Analyses**

The composite prepared in Preparation Example 1, the 1st core/shell structure prepared in Example 1, and the bare large-particle LCO prepared in Comparative Example 1 were subjected to scanning electron microscope (SEM) analysis, high-resolution transmission electron microscope (HR-TEM) analysis, and energy-dispersive X-ray spectroscopy (EDS) analysis.

For SEM-EDS analysis, a FEI Titan 80-300 (Philips) was utilized.

The composite prepared in Preparation Example 1 shows a structure in which $Al_2O_3$ particles and $Al_2O_z$ (0<z<3) particles as a reduction product thereof are embedded in graphene. It was found, without being bound by any particular theory, that a graphene layer was provided on the outside of the at least one of $Al_2O_3$ particles or $Al_2O_z$ (0<z<3) particles. The at least one of $Al_2O_3$ particles or $Al_2O_z$ (0<z<3) particles were uniformly (e.g., substantially uniformly) distributed within the graphene matrix. The at least one of $Al_2O_3$ particles or $Al_2O_z$ (0<z<3) particles was found to have a particle diameter of about 20 nm. The particle diameter of the composite prepared in Preparation Example 1 was about 50 nm to 200 nm.

It was found that in the 1st core/shell structure prepared in Example 1, graphene and the composite prepared in Preparation Example 1 were coated on the large-diameter LCO core to have a core/shell structure.

The SEM-EDS mapping analysis of the bare large-diameter LCO of Comparative Example 1 and the 1st core/shell structure prepared in Example 1 showed that the concentration of aluminum (Al) distributed on the surface of the 1st core/shell structure of Example 1 was higher than that on the bare LCO surface of Comparative Example 1. It was found that in the 1st core/shell structure of Example 1, the composite prepared in Preparation Example 1 was coated on the large-diameter LCO core to form a core/shell structure.

**Evaluation Example 3: Evaluation of XPS Spectra (Graphene-LCO Chemical Bond)**

Using Quantum 2000 (Physical Electronics), the XPS spectrum of the C 1s orbital of the 1st core/shell structure prepared in Example 1 was measured.

Peaks due to C-Co bonds in the composite cathode active material of Example 1 were observed. These peaks were determined to be peaks attributable to bonds between the carbon in graphene and Co present on the LCO surface. Therefore, it was confirmed that the graphene included in the shell formed on the core may form a covalent bond with the transition metal, Co, included in the core.

**Evaluation Example 4: Evaluation of High-Temperature (45 °C) Cycling Characteristics**

The lithium batteries prepared in Examples 5 to 8, Comparative Examples 6 to 10 and Reference Example 2 were each charged at a constant current of 0.1 C rate at 25 °C until the battery voltage reached 4.3 V (vs. Li) and then, the charging was cut-off at a current of 0.05 C rate while maintaining 4.3 V in a constant voltage mode. Then, each battery was discharged at a constant current of 0.1 C rate until the battery voltage reached 2.8 V (vs. Li) during discharge (formation cycle).

The lithium batteries after the formation cycle were each charged at a constant current of 0.1 C rate at 45 °C until the voltage reached 4.58 V (vs. Li) and then, the charging was cut-off at a current of 0.025 C rate while maintaining 4.58 V in a constant voltage mode. Then, each battery was discharged at a constant current of 1.0 C rate until the battery voltage reached 3.0 V (vs. Li) during discharge (1st cycle). The above cycle was repeated under the same conditions up to the 50th cycle.

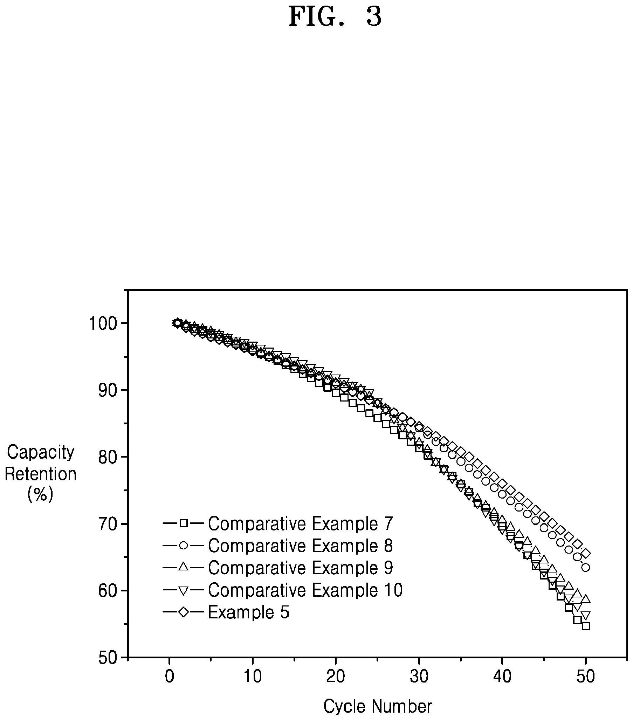

Throughout the charge-discharge cycles above, a rest period of 10 minutes was provided after each charge/discharge cycle. A part of the high-temperature cycling test results is shown in Table 1 and FIG. 3. Capacity retention ratio is defined by Equation 1.

Equation 1

$$\text{Capacity Retention Ratio [\%]} = [\text{Discharge Capacity in } 50^{th} \text{ cycle} / \text{Discharge Capacity}$$

$$\text{in } 1^{st} \text{ cycle}] \times 100$$

Table 1

|  | Capacity Retention Ratio [%] |
|---|---|
| Example 5: $Al_2O_3$@Gr Composite 0.025 wt% + CNT 0.025 wt% Coating | 65.5 |
| Example 6: $Al_2O_3$@Gr Composite 0.02 wt% + CNT 0.03 wt% Coating | 64.8 |
| Example 7: $Al_2O_3$@Gr Composite 0.04 wt% + CNT 0.01 wt% Coating | 63.9 |
| Example 8: $Al_2O_3$@Gr Composite 0.01 wt% + CNT 0.04 wt% Coating | 63.6 |
| Comparative Example 6: No Coating | 54.6 |
| Comparative Example 7: $Al_2O_3$@Gr Composite 0.025 wt% Single Coating | 63.4 |
| Comparative Example 8: $Al_2O_3$@Gr Composite 0.05 wt% Single Coating | 58.6 |
| Comparative Example 9: $Al_2O_3$@Gr Composite 0.1 wt% Single Coating | 56.8 |

As shown in Table 1 and FIG. 3, the lithium batteries of Examples 5 to 8 show improved high-temperature lifespan characteristics compared to those of the lithium batteries of Comparative Examples 6 to 9.

Furthermore, the lithium battery of Reference Example 2 showed poor high-temperature lifespan characteristics compared to those of the lithium battery of Example 5.

This result was attributed at least in part to the fact that in the lithium battery of Reference Example 2, due to utilization of the secondary particles as the small-diameter LCO particle, an increase in particle surface resistance while cycling takes place caused rapid degradation of the small-diameter LCO particles. The lithium battery of Reference Example 2 showed enhanced high-temperature lifespan characteristics compared to those of the lithium battery of Comparative Example 6.

The lithium battery of Comparative Example 10 showed poor high-temperature lifespan characteristics compared to those of the lithium battery of Example 5.

This result was attributed at least in part to poor high-voltage stability of the $SiO_2$@Gr composite provided on the LCO core in the lithium battery of Comparative Example 10.

**Evaluation Example 5: Evaluation of Direct Current-Internal Resistance DC-IR**

After high-temperature cycling evaluation, the lithium batteries prepared in Examples 5 to 8, Comparative Examples 6 to 10 and Reference Example 2 were subjected to direct current internal resistance (DC-IR) measurement as follows.

In the 1st cycle, each battery was charged to a voltage of 20% state-of-charge (SOC) at a current of 0.2 C, and then discharged at a constant current of 3.0 C for 10 seconds, and finally, discharged at 3.0 C for 10 seconds.

Direct current internal resistance (DC-IR, $R = \Delta V/\Delta I$) was calculated from the ratio of average voltage change ($\Delta V$) to average current change ($\Delta I$) during constant current discharging at each C-rate, and an average value thereof was utilized as a measurement value.

A part of the results of DC-IR measurements after the high-temperature cycling evaluation is shown in Table 2.

Table 2

| | DC-IR [ohm] |
|---|---|
| Example 5: Al$_2$O$_3$@Gr Composite 0.025 wt% + CNT 0.025 wt% Coating | 7.9 |
| Example 6: Al$_2$O$_3$@Gr Composite 0.02 wt% + CNT 0.03 wt% Coating | 7.8 |
| Example 7: Al$_2$O$_3$@Gr Composite 0.04 wt% + CNT 0.01 wt% Coating | 8.0 |
| Example 8: Al$_2$O$_3$@Gr Composite 0.01 wt% + CNT 0.04 wt% Coating | 7.7 |
| Comparative Example 6: No Coating | 8.4 |
| Comparative Example 7: Al$_2$O$_3$@Gr Composite 0.025 wt% Single Coating | 8.1 |
| Comparative Example 8: Al$_2$O$_3$@Gr Composite 0.05 wt% Single Coating | 9.6 |
| Comparative Example 9: Al$_2$O$_3$@Gr Composite 0.1 wt% Single Coating | 10.1 |

As shown in Table 2, the lithium batteries of Examples 5 to 8 show decreased DC-IR compared to that of the lithium batteries of Comparative Examples 6 to 9.

Therefore, the lithium batteries of Examples 5 to 8 show improved high-temperature stability compared to that of the lithium batteries of Comparative Examples 6 to 9.

**Evaluation Example 6: Evaluation of Room-temperature High-Rate Capability**

The lithium batteries prepared in Examples 6 to 10, Comparative Examples 6 to 10 and Reference Example 2 were each charged at a constant current of 0.1 C rate at 25 °C until the battery voltage reached 4.3 V (vs. Li) and then, the charging was cut-off at a current of 0.05 C rate while maintaining 4.3 V in a constant voltage mode. Subsequently, the battery was discharged at a constant current rate of 0.1 C until the battery voltage reached 2.8 V (vs. Li) during discharge (formation cycle).

The lithium batteries after the formation cycle were each charged at a constant current of 0.2 C rate at 25 °C until the battery voltage reached 4.3 V (vs. Li) and then, the charging was cut-off at a current of 0.05 C rate while maintaining 4.3 V in a constant voltage mode. Subsequently, the battery was discharged at a constant current rate of 0.2 C until the battery voltage reached 2.8 V during discharge (1st cycle).

The lithium batteries after the 1st cycle were each charged at a constant current of 0.2 C rate at 25 °C until the battery voltage reached 4.3 V (vs. Li) and then, the charging was cut-off at a current of 0.05 C rate while maintaining 4.3 V in a constant voltage mode. Subsequently, the battery was discharged at a constant current of 0.5 C rate until the battery voltage reached 2.8 V (vs. Li) during discharge (2nd cycle).

The lithium batteries after the 2nd cycle were each charged at a constant current of 0.2 C rate at 25 °C until the battery voltage reached 4.3 V (vs. Li) and then, the charging was cut-off at a current of 0.05 C rate while maintaining 4.3 V in a constant voltage mode. Subsequently, the lithium batteries were each discharged at a constant current of 2.0 C rate until the battery voltage reached 2.8 V (vs. Li) during discharge (3rd cycle).

Throughout the charge-discharge cycles above, a rest period of 10 minutes was provided after each charge/discharge cycle. A part of the high-rate capability test results is shown in Table 3. High-rate capability is defined by Equation 3.

Equation 3

High-Rate Capability [%] = [Discharge Capacity at 2.0 C rate (Discharge Capacity in 3rd cycle) / Discharge Capacity at 0.2 C rate (Discharge Capacity in 1st cycle)] × 100

A part of the results of the room-temperature high-rate capability evaluation is shown in Table 3.

Table 3

| | High-Rate Capability [%] |
|---|---|
| Example 5: $Al_2O_3$@Gr Composite 0.025 wt% + CNT 0.025 wt% Coating | 98.1 |
| Example 6: $Al_2O_3$@Gr Composite 0.02 wt% + CNT 0.03 wt% Coating | 98.2 |
| Example 7: $Al_2O_3$@Gr Composite 0.04 wt% + CNT 0.01 wt% Coating | 97.8 |
| Example 8: $Al_2O_3$@Gr Composite 0.01 wt% + CNT 0.04 wt% Coating | 98.3 |
| Comparative Example 6: No Coating | 97.6 |
| Comparative Example 7: $Al_2O_3$@Gr Composite 0.025 wt% Single Coating | 97.4 |
| Comparative Example 8: $Al_2O_3$@Gr Composite 0.05 wt% Single Coating | 97.3 |
| Comparative Example 9: $Al_2O_3$@Gr Composite 0.1 wt% Single Coating | 97.2 |

As shown in Table 3, the lithium batteries of Examples 5 to 8 show improved high-rate capabilities compared to those of the lithium batteries of Comparative Examples 6 to 9.

According to one or more embodiments, as the composite cathode active material includes a shell including a first metal oxide, a first carbon-based material, and a second carbon-based material, and the shell is provided on the large-diameter lithium transition metal oxide core and the small-diameter lithium transition metal oxide core, and the large-diameter lithium transition metal oxide and the small-diameter lithium transition metal oxide have one-body particle form, a lithium battery including the composite cathode active material may have improved high-temperature cycling performance, inhibited or reduced increase of internal resistance, and improved high-rate capability.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the following claims and equivalents thereof.

**Claims**

1. A composite cathode active material comprising:

   a $1^{st}$ core comprising a first lithium transition metal oxide;
   a $2^{nd}$ core comprising a second lithium transition metal oxide; and
   a shell (20) conforming to a surface of at least one of the $1^{st}$ core or the $2^{nd}$ core,
   wherein the shell (20) comprises:

   a first metal oxide (21),
   a first carbon-based material (22), and
   a second carbon-based material (23),

   wherein the first metal oxide (21) is within a matrix of the first carbon-based material (22),
   the first metal oxide (21) is represented by $M_aO_b$ ($0<a\leq3$ and $0<b<4$, wherein if a is 1, 2, or 3, b is not an integer),
   M is at least one metal selected from among Groups 2 to 13, 15, and 16 of the periodic table of elements,
   the second carbon-based material comprises a fibrous carbon-based material having an aspect ratio of 10 or more,
   the first lithium transition metal oxide and the second lithium transition metal oxide have a different particle diameter from each other,
   the first lithium transition metal oxide comprises a primary particle having a particle diameter of 3 $\mu$m or more, and
   the second lithium transition metal oxide comprises a primary particle having a particle diameter of 1 $\mu$m or more.

2. The composite cathode active material as claimed in claim 1,

wherein the first lithium transition metal oxide is a one-body primary particle, and the second lithium transition metal oxide is a one-body primary particle; and/or

wherein the first lithium transition metal oxide is a large-diameter lithium transition metal oxide having a larger particle diameter than that of the second lithium transition metal oxide, and/or

the second lithium transition metal oxide is a small-diameter lithium transition metal oxide having a smaller particle diameter than that of the first lithium transition metal oxide;

preferably wherein the first lithium transition metal oxide and/or the second lithium transition metal oxide show a bimodal particle size distribution in a particle size distribution chart, and/or

preferably a ratio of a particle diameter of the first lithium transition metal oxide to a particle diameter of the second lithium transition metal oxide is about 2:1 to about 10:1.

3. The composite cathode active material as claimed in claim 1 or 2,
wherein the first lithium transition metal oxide has a particle size of about 3 $\mu$m to about 10 $\mu$m, and the second lithium transition metal oxide has a particle size of about 1 $\mu$m to less than 5 $\mu$m.

4. The composite cathode active material as claimed in any of the preceding claims 1 to 3,

wherein a weight ratio of the first lithium transition metal oxide to the second lithium transition metal oxide is about 90:10 to about 60:40, and/or

the composite cathode active material has a specific surface area of 0.8 m$^2$/g or less.

5. The composite cathode active material as claimed in any of the preceding claims 1 to 4,

wherein the second carbon-based material comprises carbon nanofibers, carbon nanotubes, or a combination thereof,

the carbon nanotubes comprise a primary carbon nanotube structure, a secondary carbon nanotube structure comprising an agglomeration of a plurality of primary carbon nanotube particles, or a combination thereof, and the primary carbon nanotube structure is one carbon nanotube unit; and/or wherein the second carbon-based material comprises the carbon nanotubes, and

the carbon nanotubes comprise the primary carbon nanotube structure, and

wherein the primary carbon nanotube structure comprises a single-walled carbon nanotube (SWCNT), a double-walled carbon nanotube (DWCNT), a multi-walled carbon nanotube (MWCNT), or a combination thereof, and the primary carbon nanotube structure has a diameter of about 1 nm to about 20 nm and a length of about 100 nm to about 2 $\mu$m; and/or

wherein the second carbon-based material comprises the carbon nanotubes, and

the carbon nanotubes comprise the secondary carbon nanotube structure, and wherein the secondary carbon nanotube structure comprises a bundle carbon nanotube, a rope carbon nanotube, or a combination thereof, and the secondary carbon nanotube structure has a diameter of about 2 nm to about 50 nm and a length of about 500 nm to about 1,000 $\mu$m.

6. The composite cathode active material as claimed in any of the preceding claims 1 to 5,

wherein a content of the second carbon-based material is about 5 wt% to about 95 wt% with respect to a total weight of the first carbon-based material (22) and the second carbon-based material,

the content of the second carbon-based material is about 0.01 wt% to about 1 wt% with respect to a total weight of the composite cathode active material, and

the second carbon-based material is on a surface of the composite cathode active material.

7. The composite cathode active material as claimed in any of the preceding claims 1 to 6,

wherein a first metal comprised in the first metal oxide (21) is at least one metal selected from among Al, Nb, Mg, Sc, Ti, Zr, V, W, Mn, Fe, Co, Pd, Cu, Ag, Zn, Sb, and Se, and

the first metal oxide (21) is at least one selected from among Al$_2$O$_z$ (0<z<3), NbO$_x$ (0<x<2.5), MgO$_x$ (0<x<1), Sc$_2$O$_z$ (0<z<3), TiO$_y$ (0<y<2), ZrO$_y$ (0<y<2), V$_2$O$_z$ (0<z<3), WO$_y$ (0<y<2), MnO$_y$ (0<y<2), Fe$_2$O$_z$ (0<z<3), Co$_3$O$_w$ (0<w<4), PdO$_x$ (0<x<1), CuO$_x$ (0<x<1), AgO$_x$ (0<x<1), ZnO$_x$ (0<x<1), Sb$_2$O$_z$ (0<z<3), and SeO$_y$ (0<y<2).

8. The composite cathode active material as claimed in any of the preceding claims 1 to 7,

wherein the shell (20) comprises a second metal oxide,

wherein the second metal oxide is represented by $M_aO_c$ ($0<a\leq3$ and $0<c\leq4$, wherein if a is 1, 2, or 3, c is an integer), the second metal oxide comprises a same metal as the first metal oxide (21),

a ratio (c/a) of c to a in the second metal oxide is greater than a ratio (b/a) of b to a in the first metal oxide (21), and the second metal oxide is in a matrix of the first carbon-based material (22); preferably wherein the second metal oxide is selected from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and the first metal oxide (21) is a reduction product of the second metal oxide.

9. The composite cathode active material as claimed in any of the preceding claims 1 to 8,

wherein the first carbon-based material (22) comprised in the shell (20) and a transition metal of a lithium transition metal oxide comprised in the core are chemically bound by a chemical bond,

carbon (C) atoms of the first carbon-based material (22) comprised in the shell (20) and a transition metal (Me) of the lithium transition metal oxide are chemically bound by a C-Me bond, or

the first metal oxide (21) is chemically bound to the first carbon-based material (22) by a chemical bond.

10. The composite cathode active material as claimed in any of the preceding claims 1 to 9,

further comprising a third metal doped on the core, or a third metal oxide coated on the core,

wherein the shell (20) is on the third metal oxide, and

the third metal oxide is an oxide of at least one third metal selected from among Al, Zr, W, and Co.

11. The composite cathode active material as claimed in any of the preceding claims 1 to 10,

wherein the shell (20) has a thickness of about 0.1 nm to about 1 $\mu$m,

the shell (20) has a single-layer structure or a multi-layer structure,

the shell (20) is a dry-coated layer, and

a content of the shell (20) with respect to a total weight of the composite cathode active material is 5 wt% or less.

12. The composite cathode active material as claimed in any of the preceding claims 1 to 11,

wherein the lithium transition metal oxide is represented by any one of Formulae 1 to 8:

Formula 1 $\qquad Li_aCo_xM_yO_{2-b}A_b$,

wherein in Formula 1,

$1.0\leq a\leq1.2$, $0\leq b\leq0.2$, $0.9\leq x\leq1$, and $0\leq y\leq0.1$, wherein x+y=1,

M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and

A is F, S, Cl, Br, or a combination thereof,

Formula 2 $\qquad Li_aNi_xCo_yM_zO_{2-b}A_b$,

wherein in Formula 2,

$1.0\leq a\leq1.2$, $0\leq b\leq0.2$, $0.8\leq x<1$, $0\leq y\leq0.3$, and $0<z\leq0.3$, wherein x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and

A is F, S, Cl, Br, or a combination thereof,

Formula 3 $\qquad LiNi_xCo_yMn_zO_2$,

and

Formula 4 $LiNi_xCo_yAl_zO_2,$

wherein in Formulas 3 and 4, 0.8≤x≤0.95, 0≤y≤0.2, and 0<z≤0.2, wherein x+y+z=1,

Formula 5 $LiNi_xCo_yMn_zAl_wO_2,$

wherein in Formula 5, 0.8≤x≤0.95, 0≤y≤0.2, 0<z≤0.2, and 0<w≤0.2, wherein x+y+z+w=1,

Formula 6 $Li_aNi_xMnyM'_zO_{2-b}A_b,$

wherein in Formula 6,

1.0≤a≤1.2, 0≤b≤0.2, 0<x≤0.3, 0.5≤y<1, and 0<z≤0.3, wherein x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A is F, S, Cl, Br, or a combination thereof,

Formula 7 $Li_aM1_xM2_yPO_{4-b}X_b,$

wherein in Formula 7, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof,

Formula 8 $Li_aM3_zPO_4,$

and

wherein in Formula 8, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or a combination thereof.

13. A cathode (3) comprising the composite cathode active material as claimed in any of the preceding claims 1 to 12.

14. A lithium battery (1) comprising:

the cathode (3) as claimed in claim 13; an anode (2); and
an electrolyte between the cathode (3) and the anode (2);
preferably wherein the cathode (3) comprises a cathode current collector and the anode (2) comprises an anode current collector,
wherein at least one of the cathode current collector or the anode current collector comprises a base film and a metal layer on one side or both sides of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. A method of preparing a composite cathode active material according to any of the preceding claims 1 to 12, the method comprising:

preparing a 1st core/shell structure (100) by mechanically milling a first lithium transition metal oxide, a composite, and a second carbon-based material (23);

preparing a 2nd core/shell structure (100) by mechanically milling a second lithium transition metal oxide, a composite, and a second carbon-based material (23); and

preparing a composite cathode active material by mixing the 1st core/shell structure (100) and the 2nd core/shell structure (100),

wherein the composite cathode active material comprises a first metal oxide (21) represented by $M_aO_b$ ($0<a\leq3$ and $0<b<4$, wherein if a is 1, 2, or 3, b is not an integer), and a first carbon-based material (22),

wherein the first metal oxide is in a matrix of the first carbon-based material (22),

M is at least one metal selected from among Groups 2 to 13, 15, and 16 of the periodic table of elements,

the second carbon-based material comprises a fibrous carbon-based material having an aspect ratio of 10 or more,

the first lithium transition metal oxide and the second lithium transition metal oxide have a different particle diameter from each other,

the first lithium transition metal oxide comprises a primary particle having a particle diameter of 3 $\mu$m or more, and the second lithium transition metal oxide comprises a primary particle having a particle diameter of 1 $\mu$m or more.

# FIG. 1

# FIG. 2

SDI 5.0kV 8.6mm x40.0k SE(M)                    1.00μm

# FIG. 3

# FIG. 4

# FIG. 5

# FIG. 6

1

4

2

4

3

7

8

5

Europäisches
Patentamt

European
Patent Office

Office européen
des brevets

# EUROPEAN SEARCH REPORT

**Application Number**

EP 23 21 5558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/376314 A1 (SON INHYUK [KR] ET AL) 2 December 2021 (2021-12-02) * claims 1-9, 12, 16 * | 1-15 | INV.<br>H01M4/131<br>H01M4/133<br>H01M4/48 |
| A | US 10 950 851 B2 (TOYOTA MOTOR CO LTD [JP]) 16 March 2021 (2021-03-16) * claims 1-6; example 20; table 2 * | 1-15 | H01M4/505<br>H01M4/525<br>H01M4/583<br>H01M4/62 |
| A | US 2020/403228 A1 (KIM DAE-HYUN [KR] ET AL) 24 December 2020 (2020-12-24) * claims 1,10 * | 1-15 | H01M10/0525<br>H01M4/02 |
| E | EP 4 354 541 A1 (SAMSUNG SDI CO LTD [KR]) 17 April 2024 (2024-04-17) * claims 1-20 * | 1-15 | |

| | |
|---|---|
| | **TECHNICAL FIELDS SEARCHED (IPC)** |
| | H01M |

The present search report has been drawn up for all claims

| Place of search | Date of completion of the search | Examiner |
|---|---|---|
| Munich | 6 May 2024 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                       
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 5558

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | | | Publication date | Patent family member(s) | | | Publication date |
|---|---|---|---|---|---|---|---|
| US 2021376314 | A1 | | 02-12-2021 | CN | 113764665 | A | 07-12-2021 |
| | | | | EP | 3923380 | A1 | 15-12-2021 |
| | | | | JP | 7348231 | B2 | 20-09-2023 |
| | | | | JP | 2021190431 | A | 13-12-2021 |
| | | | | KR | 20210148741 | A | 08-12-2021 |
| | | | | US | 2021376314 | A1 | 02-12-2021 |
| US 10950851 | B2 | | 16-03-2021 | CN | 110400903 | A | 01-11-2019 |
| | | | | JP | 7079411 | B2 | 02-06-2022 |
| | | | | JP | 2019192470 | A | 31-10-2019 |
| | | | | US | 2019326590 | A1 | 24-10-2019 |
| US 2020403228 | A1 | | 24-12-2020 | CN | 111788724 | A | 16-10-2020 |
| | | | | CN | 111801817 | A | 20-10-2020 |
| | | | | EP | 3759753 | A1 | 06-01-2021 |
| | | | | EP | 3759755 | A1 | 06-01-2021 |
| | | | | FI | 3759753 | T3 | 15-08-2023 |
| | | | | HU | E063176 | T2 | 28-01-2024 |
| | | | | JP | 7055891 | B2 | 18-04-2022 |
| | | | | JP | 7091461 | B2 | 27-06-2022 |
| | | | | JP | 2021515966 | A | 24-06-2021 |
| | | | | JP | 2021516422 | A | 01-07-2021 |
| | | | | KR | 20200119339 | A | 19-10-2020 |
| | | | | KR | 20200130346 | A | 18-11-2020 |
| | | | | KR | 20230054493 | A | 24-04-2023 |
| | | | | PL | 3759753 | T3 | 25-09-2023 |
| | | | | US | 2020403228 | A1 | 24-12-2020 |
| | | | | US | 2020411859 | A1 | 31-12-2020 |
| | | | | US | 2021005877 | A1 | 07-01-2021 |
| | | | | WO | 2019166350 | A1 | 06-09-2019 |
| | | | | WO | 2019166930 | A1 | 06-09-2019 |
| EP 4354541 | A1 | | 17-04-2024 | CN | 117242599 | A | 15-12-2023 |
| | | | | EP | 4354541 | A1 | 17-04-2024 |
| | | | | KR | 20220165540 | A | 15-12-2022 |
| | | | | US | 2023268485 | A1 | 24-08-2023 |
| | | | | WO | 2022260383 | A1 | 15-12-2022 |

EPO FORM P0459

For more details about this annex : see Official Journal of the European Patent Office, No. 12/82

**EP 4 386 888 A1**

**REFERENCES CITED IN THE DESCRIPTION**

**Patent documents cited in the description**

- KR 1020220174987